(19) Europäisches Patentamt
European Patent Office
Office européen des brevets

(11) EP 2 216 373 B1

(12) EUROPEAN PATENT SPECIFICATION

(45) Date of publication and mention of the grant of the patent:
**29.08.2012 Bulletin 2012/35**

(51) Int Cl.:
***C09D 11/00*** *(2006.01)*

(21) Application number: **10000869.7**

(22) Date of filing: **28.01.2010**

# (54) Ink set for ink-jet recording and ink-jet recording method using the same

Tintensatz für Tintenstrahlaufzeichnung und Tintenstrahlaufzeichnungsverfahren damit

Jeu d'encre pour enregistrement par jet d'encre et procédé d'enregistrement par jet d'encre l'utilisant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.02.2009 JP 2009021906**

(43) Date of publication of application:
**11.08.2010 Bulletin 2010/32**

(73) Proprietor: **FUJIFILM Corporation**
**Tokyo (JP)**

(72) Inventors:
- **Kariya, Toshihiro**
**Ashigarakami-gun**
**Kanagawa (JP)**
- **Yanagi, Terukazu**
**Ashigarakami-gun**
**Kanagawa (JP)**

(74) Representative: **HOFFMANN EITLE**
**Patent- und Rechtsanwälte**
**Arabellastrasse 4**
**81925 München (DE)**

(56) References cited:
**EP-A1- 1 759 858** **US-A1- 2007 229 577**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

Field of the present invention

The present invention relates to an ink set for ink-jet recording suitable for recording an image by ejecting an ink using an ink-jet recording method, and an ink-jet recording method using the same.

Description of the Related Art

An ink-jet recording method is a method of recording by ejecting, toward a recording medium, an ink separated into droplet shapes and fixing the ink on the recording medium. The method is widely employed as it enables the recording of a high-grade image on various recording mediums.

As a method for promoting the fixation of an ink, a two-liquid reaction type recording method is known wherein the ink is aggregated by contacting an ink with a treatment liquid for aggregating the ink on a recording medium. For example, an ink-jet recording method is disclosed wherein a reaction liquid including a polyvalent metal salt is adhered to a recording medium, and then an ink composition including a pigment and a resin emulsion is adhered to the recording medium. According to this, it is said that image blurring and an image irregularity can be suppressed (for example, refer to Japanese Patent Application Laid-Open (JP-A) No. 9-207424).

In addition, an image recording method is disclosed wherein an ink composition is contacted, on a recording medium, with a treatment liquid including a polyvalent metal compound reacting with a component of the ink composition. According to this, it is said that in particular, an image having superior scratch resistance and marker resistance can be realized on plain paper (for example, refer to JP-A No. 2006-188045).

On the other hand, when recording on coated paper for printing, in regard to the blurring of an image, fixability (for example, scratch resistance) and resolution, there are cases where sufficient performance is not obtained. In particular, in cases of increasing the speed of ink-jet recording, there has come to be a demand for recording suitability in cases of high-speed recording not using a shuttle scan method but a single pass method which can perform recording using one head operation.

In addition, after the recording, paper or the like may be put in a stack on a recorded image portion in various cases such as collection or storage, but, if adhesion (blocking) such as sticking occurs between papers or the like put in a stack on the image portion, there may be various kinds of problems such as damage to an image and loss of handling property. To obtain an image which does not stick, methods have been considered such as raising the film-forming temperature or glass transition temperature (Tg) of a resin component contained in the ink.

In connection with the above, a recording method is disclosed which employs an ink containing a thermoplastic resin component, wherein printing is done by ejecting ink drops onto a recording medium heated to a temperature equal to or higher than the softening point of the thermoplastic resin component (for example, refer to JP-A Nos. 8-283636, 10-110126 and10-152640), and by which it is said that a high-resistant printed article without blurring and of a high grade can be obtained.

However, if the minimum film-forming temperature or Tg of the resin component contained in an ink is raised, the temperature which is needed in the heat treatment to achieve fixation performance such as scratch resistance becomes higher, and there is higher thermal energy consumption at the time of the fixing.

In contrast, if the minimum film-forming temperature is lowered so as to suppress thermal energy consumption, the recorded image is sticky and blocking occurs even though thermal energy consumption is suppressed.

The present invention has been made in view of the above, and has the object of providing an ink set for ink-jet recording capable of recording an image, which can suppress blocking from occurring in an image portion and obtain superior scratch resistance; as well as an ink-jet recording method. Further, the task of the present invention is to achieve this object.

The present inventors have found a configuration in which, when a water-based ink composition and an aqueous treatment liquid are brought into contact, the minimum film-forming temperature (hereinafter, referred to as MFT) of resin particles contained in the water-based ink composition is reduced by using a water-soluble organic solvent included in the aqueous treatment liquid, and by removing the water-soluble organic solvent over time or by heating at the time of drying after an image has been recorded, the MFT of the resin particle is increased, and thus the stickiness resistance (blocking resistance) and scratch resistance of an image portion can be made compatible while also making savings on thermal energy. Therefore, the present invention has been made based on this knowledge.

To achieve the object, the water-soluble organic solvent may be contained in the ink composition and not in the aqueous treatment liquid. However, when the constitution of the ink composition changes, it is often the case that reexamination concerning ejection stability and ink stability is necessary. If the aqueous treatment liquid contains the

water-soluble organic solvent, this concern can be eliminated.

SUMMARY OF THE INVENTION

The present invention has been made in view of the above circumstances and provides an ink set for ink-jet recording, and an ink-jet recording method using the same.

A first aspect of the present invention provides an ink set for ink-jet recording comprising:

a water-based ink composition which includes water, a coloring material, and resin particles having a minimum film-forming temperature $MFT^0$ of 60°C or higher when prepared as an aqueous dispersion; and
an aqueous treatment liquid which includes water, an aggregation agent that forms an aggregate when contacted with the water-based ink composition, and a water-soluble organic solvent prepared such that a minimum film-forming temperature $MFT^{25}$ of the resin particles is at least 50°C lower than $MFT^0$ in the aqueous dispersion when a mixed liquid is prepared wherein the mixed liquid includes a mixture of the resin particles, water, and the water-soluble organic solvent in an amount of 25% by mass relative to the solid content of the resin particles.

A second aspect of the present invention provides an ink-jet recording method comprising:

using the ink set for ink-jet recording described in the first aspect of the present invention;
recording an image by applying a water-based ink composition onto a recording medium by an ink-jet method, and applying an aqueous treatment liquid onto the recording medium.

According to the present invention, an ink set for ink-jet recording and an ink-jet recording method can be provided wherein the occurrence of blocking in an image portion is suppressed and recording of an image having superior scratch resistance can be achieved.

DETAILED DESCRIPTION OF THE INVENTION

An ink set for ink-jet recording of the present invention and an ink-jet recording method using the same will be explained in detail below.

<Ink Set>

The ink set for ink-jet recording of the present invention is a two-liquid reaction type ink set, wherein ink is aggregated by bringing a water-based ink composition into contact, on a recording medium, with an aqueous treatment liquid used for aggregating the water-based ink composition.

The water-based ink composition in the present invention includes resin particles, and these resin particles have a minimum film-forming temperature ($MFT^0$) of 60°C or higher when prepared as an aqueous dispersion. On the other hand, the aqueous treatment liquid in the present invention includes a water-soluble organic solvent, a minimum film-forming temperature ($MFT^{25}$) of the resin particles, when prepared as a mixed liquid which is a mixture of the resin particles, water and the water-soluble organic solvent in amount of 25% by mass relative to the resin particle solid portion, is lower by 50°C or greater compared to the $MFT^0$ in the aqueous dispersion. As a result, if the water-based ink composition comes into contact with an aqueous treatment liquid on a recording medium, a MFT of the resin particle is reduced, and then if the water-soluble organic solvent is removed over time or by drying, the MFT of the resin particle is increased.

Accordingly, the MFT of the resin particles just after the ink drops land is comparatively reduced, and, at the same time, the fixation performance such as scratch resistance is achieved at a low thermal energy. Subsequently, the MFT of the resin particle is increased, thereby being capable of suppressing the occurrence of blocking.

(Aqueous Treatment liquid)

The aqueous treatment liquid in the present invention (hereinafter, referred to as a "treatment liquid") includes at least one water-soluble organic solvent, at least one aggregation agent for aggregating a component of a water-based ink composition described later, and water.

(Water-Soluble Organic Solvent)

A water-soluble organic solvent, which satisfies the relationship $MFT^0\text{-}MFT^{25} \geq 50°C$ with respect to the resin particles contained in the water-based ink composition in the present invention, is selected as the water-soluble organic

solvent contained in the aqueous treatment liquid in the present invention.

"$MFT^0$" is measured by using an MFT-measuring instrument manufactured by YOSHIMITU SEIKI. Specifically, a preparation liquid, which is an aqueous dispersion obtained by dispersing the desired resin particles in water that is adjusted to have a concentration of 25% by mass, is blade-coated on a film (having dimensions, for example, of 64 cm × 18 cm) so that the applied thickness is 300 μm (for example, with length 50 cm × width 3 cm), and then the rear side of the film is heated, the applied film is provided with a temperature gradient of 12°C to 65°C, and is dried under an environment of 20°C and 22% RH for 4 hours. The $MFT^0$ is determined by measuring the border temperature [°C] between a white powdery deposit-producing temperature and a transparent film-forming temperature.

In addition, "$MFT^{25}$" is measured in a similar manner to that in the measurement of the $MFT^0$, except that a mixed liquid (aqueous solution), which contains 25% by mass of resin particles (solid mass), 6.25% by mass of water-soluble organic solvent (25% by mass relative to the resin particle solid portion) and 68.75% by mass of water, is prepared and the mixed liquid is substituted for the aqueous dispersion in the measurement operation of the $MFT^0$. In addition, when "$MFT^{25}$"exceeds the upper limit of the measuring instrument, "$MFT^{25}$" to "$MFT^{50}$"are measured appropriately, so that "$MFT^{25}$" may be estimated.

In the present invention, the range of $MFT^{25}$ is such that it is at least 50°C lower than $MFT^0$. If the temperature difference ($MFT^0$ - $MFT^{25}$) obtained by subtracting $MFT^{25}$ from $MFT^0$ is less than 50°C, heat quantity at the time of heat fixing is higher, and, at the same time, the scratch resistance of a recorded image deteriorates. In the present invention, $MFT^{25}$ is in a range at least 50°C lower than $MFT^0$, preferably in a range 50°C to 70°C lower than $MFT^0$, and more preferably in a range 60°C to 70°C lower than $MFT^0$.

From the viewpoint of suppressing blocking, $MFT^0$ is 60°C or higher. The range of $MFT^0$ is preferably 80°C to 180°C, and $MFT^{25}$ is preferably in a range 50°C to 70°C lower than $MFT^0$, and more preferably in a range 60°C to 70°C lower than $MFT^0$.

In the present invention, for the method of adjusting the temperature difference obtained by subtracting $MFT^{25}$ from $MFT^0$ to be within the range, there is a method of adjusting the temperature difference by appropriately selecting the kind and quantity of the water-soluble organic solvent contained in the aqueous treatment liquid.

In view of adjusting the temperature difference ($MFT^0$ - $MFT^{25}$) between $MFT^0$ and $MFT^{25}$ to a range of at least 50°C by lowering $MFT^{25}$, alkyleneoxy alcohol or alkyleneoxy alkyl ether is preferably used as the water-soluble organic solvent contained in the aqueous treatment liquid. In addition, for a similar reason, it is preferred that the aqueous treatment liquid contain two or more water-soluble organic solvents, and when containing two or more of the water-soluble organic solvents, at least one of these is preferably alkyleneoxy alcohol. Furthermore, two or more of the water-soluble organic solvents including at least one alkyleneoxy alcohol and at least one alkyleneoxy alkyl ether are particularly preferred.

As for the alkyleneoxy alcohol, propyleneoxy alcohol is preferred. As for propyleneoxy alcohol, SANNIX GP250 and SANNIX GP400 (trade name, manufactured by Sanyo Chemical Industries, Ltd.) are exemplified.

The alkyleneoxy alkyl ether is preferably ethyleneoxy alkyl ether having an alkyl moiety of 1 to 4 carbon atoms or propyleneoxy alkyl ether having an alkyl moiety of 1 to 4 carbon atoms. Examples of the alkyleneoxy alkyl ether include ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, and ethylene glycol monophenyl ether.

In the present invention, for example, when the resin particles are self-dispersing polymer particles to be described later, it is preferred that the water-soluble organic solvent consist of a propyleneoxy alcohol and ethyleneoxy alkyl ether (having an alkyl moeity of 1 to 4 carbon atoms) and/or propyleneoxy alkyl ether (having an alkyl moeity of 1 to 4 carbon atoms). Furthermore, when the resin particles are self-dispersing polymer particles including a water-insoluble polymer containing a hydrophilic constituent unit and a constituent unit derived from an aromatic group-containing monomer, it is preferred that the water-soluble organic solvent consist of propyleneoxy alcohol and ethyleneoxy alkyl ether (having an alkyl moeity of 1 to 4 carbon atoms) and/or propyleneoxy alkyl ether (having an alkyl moeity of 1 to 4 carbon atoms).

At least one of the water-soluble organic solvents included in the aqueous treatment liquid in the present invention is preferably a water-soluble organic solvent having a boiling point of 230°C or higher at 101.3 kPa (760 mmHg).

In a water-soluble organic solvent having a boiling point of lower than 230°C, water retention and wettability of an aqueous treatment liquid become insufficient, and there are cases where storage stability deteriorates. Furthermore, in the water-soluble organic solvent having a boiling point of lower than 230°C, fixation acceleration of component contained in the water-based ink becomes insufficient, and there are cases where a high-resolution image cannot be obtained.

Water-soluble organic solvents having a boiling point of 230°C or higher are exemplified below. However, the present invention is not limited to these.

- Diethylene glycol monobutyl ether (SP value 21.5, boiling point 231°C)
- Triethylene glycol monomethyl ether (SP value 23.4, boiling point 245°C)
- Triethylene glycol monoethyl ether (SP value 21.7, boiling point 255°C)
- Triethylene glycol monobutyl ether (SP value 21.1, boiling point 278°C)
- Tripropylene glycol monomethyl ether (SP value 20.4, boiling point 243°C)
- Triethylene glycol monomethyl ether (SP value 22.1, boiling point 245°C)

The aqueous treatment liquid in the present invention may include water-soluble organic solvents other than the water-soluble organic solvent having a boiling point of 230°C or higher, however, the content of the water-soluble organic solvent having a boiling point of 230°C or higher is preferably 70% or more by mass of all water-soluble organic solvents. The content is more preferably 80% or more by mass, and still more preferably 90% or more by mass. If the content is less than 70% by mass, the effect of curling suppression becomes insufficient. In addition, the variation in a secondary color dot diameter becomes large, and resolution deteriorates.

From the viewpoint of curling suppression, the content of all water-soluble organic solvents contained in the aqueous treatment liquid in the present invention is preferably 30 % or less by mass, more preferably 5% by mass to 25% by mass.

In addition, from the viewpoint of reducing volatile components, it is preferred that the water-soluble organic solvent contained in the aqueous treatment liquid has a vapor pressure of less than 0.01 kPa at a temperature of 20°C.

Specific examples of water-soluble organic solvents having a vapor pressure of less than 0.01 kPa at a temperature of 20°C include diethyleneglycol monobutyl ether (< 3.9 Pa), triethylene glycol monomethyl ether (< 1.33 Pa), triethylene glycol monobutyl ether (< 1.33 Pa), dipropylene glycol (< 1.33 Pa), etc.

In the aqueous treatment liquid in the present invention, the water-soluble organic solvents may be used alone or in a combination of two or more.

The SP value of the water-soluble organic solvent contained in the aqueous treatment liquid in the present invention is preferably 27.5 or less, and, from the viewpoint of curling suppression, the SP value is more preferably 23.0 or less. If the SP value exceeds 27.5, the curling suppression becomes insufficient. In addition, the $MFT^{25}$ tends to rise.

The solubility parameter (SP value) of a water-soluble solvent as used in the invention is a value expressed as the square root of cohesive energy of molecules and expressed in $(MPa)^{1/2}$s. SP values can be calculated by the method described in R. F. Fedors, Polymer Engineering Science, 14, pages. 147 to 154 (1974). The values used in this invention are preferably calculated by this method. Specifically, in the method described in the above scientific article by R. F. Fedors, the solubility parameter (SP value) of a particular water-soluble solvent at 25°C can be calculated using the following equation:

$$\delta = \left[ \frac{\sum_i \Delta e_i}{\sum_i \Delta v_i} \right]^{1/2}$$

In the above equation δ represents the solubility parameter (SP value) of the water-soluble solvent at 25°C; $\Delta e_i$ is the additive atomic and group contribution for the energy of vaporization of said solvent; $\Delta v_i$ is the additive atomic and group contribution for the molar volume of said solvent; and the summation index i represents the number of atoms or groups within the molecular structure of the water-soluble solvent. The contributions $\Delta e_i$ and $\Delta v_i$ at a temperature of 25°C are listed in Table 5 on page 152 of Fedor's article as identified above. Hence, based on only the knowledge of the chemical structure of the particular water-soluble solvent, i.e. the atoms and groups constituting the molecular structure thereof, the required contributions $\Delta e_i$ and $\Delta v_i$ can be selected from Table 5 of Fedor's paper, and on their basis δ be calculated using the above equation. In the event that the water-soluble solvent has a cyclic structure, the solubility parameter thereof can be estimated from the properties of a linear compound having the same chemical structure, and adding a cyclization increments $\Delta e_i$ and $\Delta v_i$, which increment is also listed in Table 5 of the paper. More details and a concrete example for calculating the solubility parameter of a cyclic water-soluble solvent are provided on pages 152 and 153 of Fedor's paper. As will be appreciated from the above, according to a preferred embodiment, the SP value of the water-soluble solvent for use in the present invention refers to the SP value at a temperature of 25°C.

(Aggregation Agent)

The aqueous treatment liquid in the present invention contains at least one aggregation agent for aggregating a component in a water-based ink composition. The aggregation agent is not particularly limited as long as at least one of the components in a water-based ink composition can be aggregated, however, it is preferred that the component in the water-based ink composition be able to be aggregated by coming into contact with the aggregation agent in the state of existence in a dried film, and it is preferred that the aggregation agent be a compound which can be easily dissolved in the water-based ink composition by coming into contact with the water-based ink composition.
Among these, from the viewpoint of the aggregation property, at least one of multivalent metal salts having high water-solubility and acidic compounds having high water-solubility is preferable, and at least one of acidic compounds having high water-solubility is more preferable. Furthermore, as for acidic compounds, from the viewpoint of aggregating all the ink by reaction with a water-based ink composition, acidic compounds having a valency of two or more are divalent or of greater valence are more preferable.
Here, the aggregation reaction of a component in a water-based ink composition can be achieved, for example, by reducing the dispersion stability of particles (coloring materials (for example, pigments), resin particles, etc.) dispersed in a water-based ink composition and by raising the viscosity of the whole ink.
Specifically, for example, when an acidic compound is used as an aggregation agent, the surface charge of particles such as pigment particles or resin particles in an ink, which is stably dispersed by a weak acidic functional group such as a carboxy group, is reduced by coming into contact with an acidic compound having lower pKa, and dispersion stability can be decreased. Therefore, the acidic compounds used as an aggregation agent contained in an aqueous treatment liquid is preferably one which has low pKa, high water-solubility and a valency of two or more, and is more preferably a divalent or trivalent acidic compound having high buffering ability in a pH range that is lower than the pKa of the functional group (for example, a carboxy group) which stably disperses the ink particles.
Specifically, phosphoric acid, oxalic acid, malonic acid, succinic acid, citric acid and phthalic acid are exemplified. In addition, other acidic compounds having pKa and solubility similar to these can be used.
Among these acidic compounds, since citric acid has high water-retaining ability and the physical strength of an aggregated ink tends to rise, it is preferably employed when greater mechanical properties are required. On the other hand, since malonic acid has low water-retaining ability, it is preferably employed when quick drying the treatment liquid is necessary.
In this way, the aggregation agent can be appropriately selected and used based on secondary factors other than the aggregation ability of the water-based ink composition.
As the multivalent metal salts, salts of alkaline earth metal (for example, magnesium, calcium) belonging to the second group of the periodic table, transition metals (for example, lanthanum) belonging to the third group of the periodic table, cations of elements (for example, aluminum) belonging to the thirteenth group of the periodic table, or lanthanoids (for example, neodymium) are exemplified. As salts of these metals, carboxylates (formate, acetate, benzoate, etc.), nitrates, chlorides, and thiocyanate are suitable. Among these, calcium salt or magnesium salt of carboxylic acids (formic acid, acetic acid, benzoic acid, etc.), calcium salt or magnesium salt of nitric acids, calcium chloride, magnesium chloride, and calcium salt or magnesium salt of thiocyanic acids are preferred.
The aggregation agents can be used alone or in combination.
The content of the aggregation agent in an aqueous treatment liquid, which is used for aggregating a component in a water-based ink composition, is preferably 1% by mass to 40% by mass, more preferably 5% by mass to 30% by mass, still more preferably 10% by mass to 25% by mass, from the viewpoint of the aggregation effect.

(Other Components)

The aqueous treatment liquid in the present invention includes an aggregation agent and a water-soluble organic solvent as essential constitut components; however, it may additionally include surfactants and other additives.
The surface tension of the aqueous treatment liquid in the present invention is preferably 20 mN/m to 60 mN/m, more preferably 25 mN/m to 50 mN/m, and still more preferably 25 mN/m to 45 mN/m, from the viewpoint of aggregation speed of a water-based ink composition. The surface tension is measured under a condition of 25°C by a plate method using Automatic Surface Tensiometer CBVP-Z (trade name, manufactured by Kyowa Interface Science Co., Ltd.).
In addition, the viscosity at 20°C of the aqueous treatment liquid in the present invention is preferably 1.2 mPa·s to 15.0 mPa·s, more preferably 2 mPa·s or more but less than 12 mPa·s, and still more preferably 2 mPa·s or more but less than 8 mPa·s, from the viewpoint of application stability of an aqueous treatment liquid. When the viscosity is in this range, for example, when an aqueous treatment liquid is applied by coating, the aqueous treatment liquid can be applied more uniformly and more stably. The viscosity of the aqueous treatment liquid is measured at a temperature of 20°C by using VISCOMETER TV-22 (trade name, manufactured by TOKI SANGYO Co., Ltd.).
In addition, the viscosity of the aqueous treatment liquid can be appropriately changed by usual methods such

as adjustment of the kind and the content of a water-soluble organic solvent, addition of viscosity regulator, etc.

(Water-based ink composition)

A water-based ink composition (hereinafter, may be referred to as "ink composition" or "water-based ink") used in the present invention includes at least a coloring material, a resin particle, and water. In addition, the water-based ink composition of the present invention can be constituted by further using a water-soluble organic solvent, a dispersant, a surfactant, or other components, if necessary.

(Coloring Material)

The water-based ink composition used in the invention may contain at least one coloring material. As the coloring material, any one of conventional dyes, pigments and the like may be used without particular limitation. Among the coloring materials, a coloring material that is substantially insoluble or slightly soluble in water is preferred from the standpoint of ink coloring properties. Specific examples of the coloring material include various pigments, disperse dyes, oil-soluble dyes and dyestuffs forming J aggregate. Pigments are more preferred.

In the invention, the water-insoluble pigment itself or the pigment that is surface-treated with a dispersant itself can be used as the water-insoluble colored particles.

In the invention, the pigment may be of any type, and any conventional organic or inorganic pigments may be used. Examples of the pigments include organic pigments such as azo lakes, azo pigments, polycyclic pigments such as phthalocyanine pigments, perylene and perinone pigments, anthraquinone pigments, quinacridone pigments, dioxazine pigments, diketopyrrolopyrrole pigments, thioindigo pigments, isoindolinone pigments, and quinophthalone pigments, dye lakes such as basic dye lakes and acidic dye lakes, nitro pigments, nitroso pigments, aniline black, and daylight fluorescent pigments; and inorganic pigments such as titanium oxide, iron oxide pigments, and carbon black pigments. Though not listed in the Color Index, any pigment capable of being dispersed in an aqueous phase may also be used. As a matter of course, a product produced by surface-treating the pigment with a surfactant, a polymer dispersant or the like, or graft carbon or the like may also be used. Among the pigments, in particular, azo pigments, phthalocyanine pigments, anthraquinone pigments, quinacridone pigments, or carbon black pigments are preferably used.

(Dispersant)

When a coloring material of the present invention is a pigment, it is preferred that it be dispersed in a water-based solvent by a dispersant. A dispersant may be a polymer dispersant or a low molecular-weight surfactant type dispersant. In addition, the polymer dispersant may be either a water-soluble dispersant or a water-insoluble dispersant.

The low molecular-weight surfactant type dispersant (hereinafter, may be referred to as "low molecular-weight dispersant") can be added for the purpose of stably dispersing an organic pigment in an aqueous solvent while keeping the ink at a low viscosity. The low molecular-weight dispersant mentioned here is a low molecular-weight dispersant having a molecular weight of 2000 or less. In addition, the molecular weight of the low molecular-weight dispersant is preferably 100 to 2000, and more preferably 200 to 2000.

The low molecular-weight dispersant has a structure containing a hydrophilic group and a hydrophobic group. At least one of each of the hydrophilic group and the hydrophobic group may be independently contained in one molecule, and the low molecular-weight dispersant may have plural hydrophilic groups and plural hydrophobic groups. The low molecular-weight dispersant can appropriately have a linking group for linking the hydrophilic group and the hydrophobic group.

The hydrophilic group may be an anionic group, a cationic group, a nonionic group, or a betaine type group having a combination thereof.

The anionic group is preferably a phosphate group, a phosphonate group, a phosphinate group, a sulfate group, a sulfonate group, a sulfinate group, or a carboxy group, more preferably a phosphate group or a carboxy group, further preferably a carboxy group, while it may be any group having negative charge.

The cationic group is preferably an organic cationic substituent, more preferably a nitrogen- or phosphorus-containing cationic group, further preferably a nitrogen-containing cationic group, while it may be any group having positive charge. In particular, the cationic group is preferably a pyridinium cation or an ammonium cation.

The nonionic group may be of any type, as long as it has neither negative nor positive charge. For example, it may be part of polyalkylene oxide, polyglycerin or any sugar unit, or the like.

It is preferred in the invention that the hydrophilic group is an anionic group from the standpoints of dispersion stability and aggregation properties of a pigment.

When the low molecular-weight dispersant has an anionic hydrophilic group, its pKa is preferably 3 or more from the standpoint of accelerating an aggregation reaction when contacted with an acidic treatment liquid. The pKa of

the low molecular-weight dispersant herein is a value experimentally obtained from a titration curve by titrating a liquid obtained by dissolving 1 mmol/L of a low molecular-weight dispersant in a tetrahydrofuran:water=3:2 (V/V) solution, with an acid or alkali aqueous solution.

Theoretically, when pKa of a low molecular-weight dispersant is 3 or more, 50% or more of anionic groups are in a non-dissociation state when contacted with a treatment liquid having a pH of about 3. Therefore, water solubility of the low molecular-weight dispersant is remarkably decreased, and an aggregation reaction occurs. In other words, aggregation reactivity is improved. From this standpoint, it is preferred that the low molecular-weight dispersant has a carboxy group as an anionic group.

The hydrophobic group may have any of a hydrocarbon structure, a fluorocarbon structure, a silicone structure, and so on. In particular, the hydrophobic group is preferably a hydrocarbon group. The hydrophobic group may be any of a straight chain structure and a branched structure. The hydrophobic group may form a single chain structure or two or more chain-structure. When a two or more chain-structure is formed, the dispersant may have different hydrophobic groups.

The hydrophobic group is preferably a hydrocarbon group of 2 to 24 carbon atoms, more preferably a hydrocarbon group of 4 to 24 carbon atoms, and further preferably a hydrocarbon group of 6 to 20 carbon atoms.

Among the polymer dispersants in the invention, a hydrophilic polymer may be used as the water-soluble dispersant. Examples of a natural hydrophilic polymer include vegetable polymers such as gum Arabic, gum tragacanth, gum guar, gum karaya, locust bean gum, arabinogalactan, pectin and quince seed starch; seaweed polymers such as alginic acid, carrageenan and agar; animal polymers such as gelatin, casein, albumin and collagen; and microbial polymers such as xanthene gum and dextran.

Examples of a chemically modified hydrophilic polymer using a natural product as a raw material include cellulose polymers such as methyl cellulose, ethyl cellulose, hydroxyethyl cellulose, hydroxypropyl cellulose and carboxymethyl cellulose; starch polymers such as sodium starch glycolate and sodium starch phosphate; and seaweed polymers such as propylene glycol alginate.

Examples of a synthetic water-soluble polymer include vinyl polymers such as polyvinyl alcohol, polyvinyl pyrrolidone and polyvinyl methyl ether; acrylic resins such as polyacrylamide, polyacrylic acid or an alkali metal salt thereof, and water-soluble styrene acrylic resin; water-soluble styrene maleic acid resins; water-soluble vinylnaphthalene acrylic resins; water-soluble vinylnaphthalene maleic resins; polyvinyl pyrrolidone, polyvinyl alcohol, alkali metal salts of β-naphthalenesulfonic acid formalin condensate; and polymers having a salt of a cationic functional group such as quaternary ammonium or an amino group at a side chain thereof.

Among these, a polymer containing a carboxy group is preferred from the standpoints of dispersion stability and aggregation properties of pigment. Polymers containing a carboxy group, such as acrylic resins such as water-soluble styrene acrylic resin; water-soluble styrene maleic acid resin; water-soluble vinylnaphthalene acrylic resin; and water-soluble vinylnaphthalene maleic acid resin are particularly preferred.

Among the polymer dispersants, as a water-insoluble dispersant, a polymer having both a hydrophilic moiety and a hydrophobic moiety may be used. Examples of such a polymer include styrene-(meth)acrylic acid copolymer, styrene-(meth)acrylic acid-(meth)acrylic acid ester copolymer, (meth)acrylic acid ester-(meth)acrylic acid copolymer, polyethylene glycol (meth)acrylate-(meth)acrylic acid copolymer and styrene-maleic acid copolymer.

The polymer dispersant in the invention preferably has a weight average molecular weight of from 3,000 to 200,000, more preferably from 5,000 to 100,000, further preferably from 5,000 to 80,000, and particularly preferably from 10,000 to 60,000.

Mixing mass ratio of a pigment to a dispersant (pigment:dispersant) is preferably in a range of from 1:0.06 to 1:3, more preferably in a range of from 1:0.125 to 1:2, and further preferably in a range of from 1:0.125 to 1:1.5.

When a dye is used as the coloring material in the invention, a material in which a water-insoluble carrier supports a dye can be used as water-insoluble colored particles. As the dye, conventional dyes may be used without particular limitation. For example, dyes described in JP-A No. 2001-115066, JP-A No. 2001-335714 and JP-A No. 2002-249677 can preferably be used in the invention. The carrier used is not particularly limited so long as it is insoluble or slightly soluble in water, and inorganic materials, organic materials and their composite materials can be used. Specifically, carriers described in JP-A No. 2001-181549 and JP-A No. 2007-169418 can preferably be used in the invention.

The carrier supporting a dye (water-insoluble colored particles) can be used as an aqueous dispersion using a dispersant. As the dispersant, any of the dispersants described hereinabove can be preferably used.

In the invention, the coloring material preferably contains a pigment and a dispersant, more preferably an organic pigment and a polymer dispersant, and particularly preferably an organic pigment and a polymer dispersant having a carboxy group, from the viewpoints of scratch resistance and aggregation property.

From the viewpoint of aggregation property, the coloring material is preferably coated with a polymer dispersant having a carboxy group and insoluble in water.

In the invention, the self-dispersing polymer particles described later preferably have an acid value lower than

the acid value of the polymer dispersant, from the viewpoint of aggregation property.

The coloring material has an average particle diameter of preferably from 10 nm to 200 nm, more preferably from 10 nm to 150 nm, and further preferably from 10 nm to 100 nm. When the average particle diameter is 200 nm or less, color reproducibility becomes better, and in the case of an inkjet method, droplet ejection properties become better. Furthermore, when the average particle diameter is 10 nm or more, light resistance becomes better.

Particle size distribution of the coloring material is not particularly limited, and may be any of a wide particle size distribution and a monodispersed particle size distribution. A mixture of two or more kinds of coloring materials each having a monodispersed particle size distribution may be used.

The average particle diameter and the particle diameter distribution of the polymer particles can be determined by measuring the volume average particle diameter by means of a dynamic light scattering method using a particle size distribution measuring apparatus NANOTRACK UPA-EX150 (trade name, manufactured by Nikkiso Co., Ltd.).

The coloring materials may be used alone or in combination.

From the viewpoint of image density, the content of the coloring material in the ink composition is preferably from 1% by mass to 25% by mass, more preferably from 2% by mass to 20% by mass, further preferably from 5% by mass to 20% by mass, particularly preferably from 5% by mass to 15% by mass.

(Resin Particle)

The water-based ink composition of the present invention includes at least one type of resin particles where the minimum film-forming temperature ($MFT^0$) when prepared as an aqueous dispersion is 60°C or higher. The resin particles having an $MFT^0$ of lower than 60°C may be comprised, however, if the $MFT^0$ of all the resin particles in a water-based ink composition is lower than 60°C, stickiness remains in the image after recording, and blocking occurs when paper is disposed in a stack on an image portion.

In the present invention, the $MFT^0$ is preferably 80°C to 150°C, more preferably 100°C to 130°C. If the $MFT^0$ is lower than 150°C, because the heat quantity at the time of fixation by heating may be low, it is preferable from the point of saving energy during the fixation.

Examples of the resin particles according to the invention include particles of a resin having an anionic group. Examples of the resin having an anionic group include thermoplastic, thermosetting, or thermally modified acrylic, epoxy, polyurethane, polyether, polyamide, unsaturated polyester, phenolic, silicone, and fluoro resins, polyvinyl type resins such as vinyl chloride, vinyl acetate, polyvinyl alcohol, and polyvinyl butyral resins, polyester resins such as alkyd resins and phthalic acid resins, amino type materials such as melamine resins, melamine formaldehyde resins, amino alkyd condensate resins, urea resin, and copolymers or mixtures thereof.

Among them, the anionic acrylic resin is obtained, for example, by polymerizing an acrylic monomer having an anionic group (anionic group-containing acrylic monomer) and, if necessary, a monomer(s) copolymerizable with the anionic group-containing acrylic monomer in a solvent. Examples of the anionic group-containing acrylic monomer include acrylic monomers having at least one selected from the group consisting of a carboxy group, a sulfonic acid group, and a phosphonic acid group. Among them, acrylic monomers having a carboxy group (for example, acrylic acid, methacrylic acid, crotonic acid, ethacrylic acid, propyl acrylic acid, isopropyl acrylic acid, itaconic acid, and fluoric acid, etc.) are preferred, and acrylic acid or methacrylic acid are particularly preferred.

As the resin particles in the invention, self-dispersing polymer particles are preferred and self-dispersing polymer particles having a carboxy group is more preferred, from the viewpoint of the ejection stability and the liquid stability (particularly, dispersion stability) in the case of using a coloring material (particularly, pigment). The self-dispersing polymer particles mean particles of a water-insoluble polymer which can form a dispersion state in an aqueous medium by means of a functional group (particularly, an acidic group or a salt thereof) of the polymer per se in the absence of other surfactant, and are water-insoluble polymer particles not containing an additional emulsifier.

The dispersion state may be an emulsion state where the water-insoluble polymer is dispersed in a liquid state in an aqueous medium (emulsion) or a dispersion state where the water-insoluble polymer is dispersed in a solid state in an aqueous medium (suspension).

The water-insoluble polymer in the invention is preferably such a water-insoluble polymer that can form a dispersion state where the water-insoluble polymer is dispersed in a solid state, from the viewpoints of the aggregation rate and the fixability when it is prepared as a liquid composition.

In the present invention, the dispersion state of self-dispersing polymer particles means the state wherein, after the solution prepared by dissolving 30 g of a water-insoluble polymer in 70 g of an organic solvent (for example, methyl ethyl ketone), a neutralizer (if a salt-producing group is anionic, it is sodium hydroxide, and if a salt-producing group is cationic, it is acetic acid) which can neutralize 100% of a salt-producing group of the water-insoluble polymer, and 200 g of water are mixed and stirred (device: a stirrer equipped with a stir blade, with revolutions of 200 rpm, for 30 minutes, at 25°C), and also after the organic solvent is removed from the mixed liquid, it can be confirmed by viewing that a dispersion state is stably maintained for at least one week at 25°C.

In addition, a water-insoluble polymer means a polymer wherein, when a polymer is dried for 2 hours at 105°C and then is dissolved in 100 g of water of 25°C, the dissolved amount is 10 g or less, preferably 5 g or less, more preferably 1 g or less. The dissolved amount means the amount dissolved when 100% of the polymer is neutralized with sodium hydroxide or acetic acid depending on the kind of salt-producing group of the water-insoluble polymer.

An aqueous medium may include water, and may also include a water-soluble organic solvent, if necessary. In the present invention, it is preferred that the aqueous medium include water and a water-soluble organic solvent in an amount of 0.2% or less by mass relative to the water, and it is more preferable that the aqueous medium is water.

The main chain skeleton of the water-insoluble polymer is not particularly limited and, for example, vinyl polymer or condensation type polymer (epoxy resin, polyester, polyurethane, polyamide, cellulose, polyether, polyurea, polyimide, polycarbonate, etc.) can be used. Among them, the vinyl polymer is particularly preferred.

Preferred examples of the vinyl polymer and the monomer used for the vinyl polymer include those described in JP-A Nos. 2001-181549 and 2002-88294. Further, vinyl polymers introduced with a dissociative group to a terminal end of a polymer chain by radical polymerization of a vinyl monomer using a chain transfer agent, a polymerization initiator, or an iniferter having a dissociative group (or substituent that can be induced to the dissociative group) or by ionic polymerization using a compound having a dissociative group (or substituent that can be induced to the dissociative group) to an initiator or a terminator can also be used.

Preferred examples of condensation type polymers and monomers used for the condensation type polymers include those described in JP-A No. 2001-247787.

The self-dispersing polymer particles in the invention preferably contain a water-insoluble polymer containing a hydrophilic constituent unit and a constituent unit derived from an aromatic group-containing monomer from the viewpoint of self-dispersibility.

The hydrophilic constituent unit is not particularly limited as long as it is derived from a hydrophilic group-containing monomer, and may be derived from one kind of a hydrophilic group-containing monomer or two or more kinds of hydrophilic group-containing monomers. The hydrophilic group is not particularly limited, and may be a dissociative group or a nonionic hydrophilic group.

In the present invention, the hydrophilic group is preferably a dissociative group from the viewpoint of self-dispersion acceleration and the stability of the formed emulsion or dispersion state, and is more preferably an anionic dissociative group. The dissociative group includes a carboxy group, a phosphate group, a sulfonic acid group, etc., and, among these, from the viewpoint of fixability when constituting an ink composition, a carboxy group is preferred.

The hydrophilic group-containing monomer in the invention is preferably a dissociative group-containing monomer and, preferably, a dissociative group-containing monomer having a dissociative group and an ethylenically unsaturated bond from the viewpoints of the self-dispersibility and the aggregation property.

Examples of the dissociative group-containing monomer include an unsaturated carboxylic acid monomer, an unsaturated sulfonic acid monomer, and an unsaturated phosphoric acid monomer.

Specific examples of the unsaturated carboxylic acid monomer include acrylic acid, methacrylic acid, crotonic acid, itaconic acid, maleic acid, fumaric acid, citraconic acid, and 2-(methacryloyloxy)methyl succinate, etc. Specific examples of the unsaturated sulfonic acid monomer include styrenesulfonic acid, 2-acrylamido-2-methylpropanesulfonic acid, 3-sulfopropyl (meth)acrylate, and bis(3-sulfopropyl) itaconate. Specific examples of the unsaturated phosphoric acid monomer include vinylphosphonic acid, vinyl phosphate, bis(methacryloyloxyethyl) phosphate, diphenyl-2-acryloyloxyethyl phosphate, diphenyl-2-methacryloyloxyethyl phosphate, and dibutyl-2-acryloyloxyethyl phosphate.

Among the dissociative group-containing monomers, an unsaturated carboxylic acid monomer is preferred acrylic monomer is more prefered and, acrylic acid and methacrylic acid are even more preferred from the viewpoints of dispersion stability and ejection stability.

The self-dispersing polymer particles in the invention preferably contain a polymer having a carboxy group and contains, more preferably, a polymer having a carboxy group and an acid value (mgKOH/g) of from 25 to 100, from the viewpoints of the self-dispersibility and the aggregation rate when the ink composition containing the polymer particles is in contact with an aqueous treatment liquid. The acid value is, more preferably, from 25 to 80 and, particularly preferably, from 30 to 65, from the viewpoints of the self-dispersibility and the aggregation rate when the ink composition containing the polymer particles is in contact with the aqueous treatment liquid.

Particularly, when the acid value is 25 or more, the stability of the self-dispersibility may be more favorable, and when the acid value is 100 or less, the aggregation property may be improved.

The aromatic group-containing monomer is not particularly limited so long as it is a compound containing an aromatic group and a polymerizable group. The aromatic group may be either a group derived from an aromatic hydrocarbon or a group derived from an aromatic heterocycle. In the invention, the aromatic group is preferably an aromatic group derived from an aromatic hydrocarbon, from the viewpoint of the shape stability of particles in the aqueous medium.

The polymerizable group may be either a polycondensating polymerizable group or an addition polymerizing polymerizable group. In the invention, the polymerizable group is preferably an addition polymerizing polymerizable group, and more preferably, a group containing an ethylenically unsaturated bond from the viewpoint of shape stability

of particles in the aqueous medium.

In the invention, the aromatic group-containing monomer preferably forms an acrylic resin containing a constituent unit derived from a (meth)acrylate monomer or preferably forms an acrylic resin containing a constituent unit derived from an aromatic group-containing (meth)acrylate monomer and is more preferably a monomer having an aromatic group derived from an aromatic hydrocarbon and having an ethylenically unsaturated bond. The aromatic group-containing monomers may be used alone or in combination.

Examples of the aromatic group-containing monomer include phenoxyethyl (meth)acrylate, benzyl (meth)acrylate, phenyl (meth)acrylate, and styrene type monomer. Among them, from the viewpoints of the balance between the hydrophilicity and the hydrophobicity of the polymer chain and the ink fixing property, an aromatic group-containing (meth)acrylate monomer is preferred, and at least one selected from the group consisting of phenoxyethyl (meth)acrylate, benzyl (meth)acrylate, and phenyl (meth)acrylate is more preferably and, phenoxyethyl (meth)acrylate and benzyl (meth) acrylate are still more preferred.

"(Meth)acrylate" means acrylate or methacrylate.

A self-dispersing polymer particle in the present invention includes a constituent unit derived from an aromatic group-containing (meth)acrylate monomer, and its content is preferably 10% by mass to 95% by mass. If the content of the aromatic group-containing (meth)acrylate monomer is 10% by mass to 95 % by mass, the stability of the self-emulsification or self-dispersion state is improved, and also a rise in ink viscosity can be suppressed.

In the present invention, from the viewpoints of the stability of self-dispersion state, the stabilization of the particle shape in an aqueous medium by the hydrophobic interaction between aromatic rings and the reduction of the amount of the water-soluble component by suitable particle hydrophobization, the content is more preferably 15% by mass to 90% by mass, still more preferably 15% by mass to 80% by mass, particularly preferably 25% by mass to 70% by mass.

The self-dispersing polymer particles in the invention can be formed by using, for example, a constituent unit derived from an aromatic group-containing monomer and a constituent unit derived from a dissociative group-containing monomer. The polymer particles may further contain other constituent units if necessary.

Any monomer copolymerizable with the aromatic group-containing monomer and the dissociative group-containing monomer may be used to form the other constituent units. In particular, such a monomer is preferably an alkyl group-containing monomer from the viewpoint of polymer skeleton flexibility or easiness of glass transition temperature (Tg) control.

Examples of the alkyl group-containing monomer include (meth)acrylic ester monomers such as alkyl (meth) acrylates such as methyl (meth)acrylate, ethyl (meth)acrylate, isopropyl (meth)acrylate, n-propyl (meth)acrylate, n-butyl (meth)acrylate, isobutyl (meth)acrylate, tert-butyl (meth)acrylate, hexyl (meth)acrylate, and ethylhexyl (meth)acrylate, hydroxy group-containing ethylenically unsaturated monomers such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate, and dialkylaminoalkyl (meth)acrylate such as dimethylaminoethyl (meth)acrylate; and (meth) acrylamide monomers such as (meth)acrylamides such as N-hydroxyalkyl (meth)acrylamides such as N-hydroxymethyl (meth)acrylamide, N-hydroxyethyl (meth)acrylamide, and N-hydroxybutyl (meth)acrylamide, and N-alkoxyalkyl (meth) acrylamides such as N-methoxymethyl (meth)acrylamide, N-ethoxymethyl (meth)acrylamide, N-(n-, iso)butoxymethyl (meth)acrylamide, N-methoxyethyl (meth)acrylamide, N-ethoxyethyl (meth)acrylamide, and N-(n-, iso)butoxyethyl (meth) acrylamide.

A weight-average molecular weight of the water-insoluble polymer that is used in the self-dispersing polymer particles in the invention is, preferably, from 3,000 to 200,000 and, more preferably, from 5,000 to 150,000 and, further preferably, from 10,000 to 100,000.

The amount of the water-soluble component can be suppressed effectively by defining the weight average molecular weight to 3,000 or more. Further, the self-dispersion stability can be increased by defining the weight average molecular weight to 200,000 or less.

The weight average molecular weight was measured by gel permeation chromatography (GPC). In GPC, HLC-8220GPC (trade name, manufactured by Tosoh Corporation) was used, and 3 pieces of columns, TSKgel Super HZM-H, TSKgel SuperHZ 4000, and TSKgel SuperHZ 2000, connected in series (trade name,all manufactured by Tosoh Corporation) were used as the column, and THF (tetrahydrofuran) was used as an eluate. Further, the measurement was performed by using an IR detector under the conditions at a sample concentration of 0.45% by mass, a flow rate of 0.35 mL/min, a sample ejection amount of 10 μL, and a measuring temperature of 40°C. A calibration curve was prepared based on eight samples of "standard sample TSK: standard, polystyrene" of "F-40", "F-20", "F-4", "F-1", "A-5000", "A-2500", "A-1000", and "n-propylbenzene" manufactured by

Tosoh Corporation.

The water-insoluble polymer used for the self-dispersing polymer particle in the invention preferably contains

a structural unit derived from an aromatic group-containing (meth)acrylate monomer (preferably, a structural unit derived from phenoxyethyl (meth)acrylate and/or a structural unit derived from benzyl (meth)acrylate) at from 15% by mass to 80% by mass as the copolymerization ratio based on the entire mass of the self-dispersing polymer particles from the viewpoint of controlling the hydrophilicity and hydrophobicity of the polymer.

Further, the water-insoluble polymer preferably contains a constituent unit derived from an aromatic group-containing (meth)acrylate monomer at from 15% by mass to 80% by mass as the copolymerization ratio, a constituent unit derived from a carboxy group-containing monomer, and a constituent unit derived from an alkyl group-containing monomer (preferably, a constituent unit derived from (meth)acrylic acid alkyl ester). The water-insoluble polymer more preferably contains a structural unit derived from phenoxyethyl (meth)acrylate and/or a structural unit derived from benzyl (meth)acrylate at from 15 to 80 mass% as the copolymerization ratio, a constituent unit derived from a carboxy group-containing monomer, and a constituent unit derived from an alkyl group-containing monomer (preferably, a structural unit derived from an ester of alkyl having 1 to 4 carbon atoms and (meth)acrylic acid). Further, the water-insoluble polymer has preferably an acid value of from 25 to 100 and a weight average molecular weight of from 3,000 to 200,000 and, more preferably, an acid value of from 25 to 95 and a weight average molecular weight of from 5,000 to 150,000, from the viewpoints of controlling the hydrophilicity and hydrophobicity of the polymer.

As specific examples of the water-insoluble polymer that is used in the self-dispersing polymer particle, exemplary compounds B-01 to B-19 are shown below but the invention is not limited to them. Numerical values described in each parenthesis represent the mass ratio of the copolymer components.

B-01: phenoxyethyl acrylate/methyl methacrylate/acrylic acid copolymer (50/45/5)
B-02: phenoxyethyl acrylate/benzyl methacrylate/isobutyl methacrylate/methacrylic acid copolymer (30/35/29/6)
B-03: phenoxyethyl methacrylate/isobutyl methacrylate/methacrylic acid copolymer (50/44/6)
B-04: phenoxyethyl acrylate/methyl methacrylate/ethyl acrylate/acrylic acid copolymer (30/55/10/5)
B-05: benzyl methacrylate/isobutyl methacrylate/methacrylic acid copolymer (35/59/6)
B-06: styrene/phenoxyethyl acrylate/methyl methacrylate/acrylic acid copolymer (10/50/35/5)
B-07: benzyl acrylate/methyl methacrylate/acrylic acid copolymer (55/40/5)
B-08: phenoxyethyl methacrylate/benzyl acrylate/methacrylic acid copolymer (45/47/8)
B-09: styrene/phenoxyethyl acrylate/butyl methacrylate/acrylic acid copolymer (5/48/40/7)
B-10: benzyl methacrylate/isobutyl methacrylate/cyclohexyl methacrylate/methacrylic acid copolymer (35/30/30/5)
B-11: phenoxyethyl acrylate/methyl methacrylate/butyl acrylate/methacrylic acid copolymer (12/50/30/8)
B-12: benzyl acrylate/isobutyl methacrylate/acrylic acid copolymer (93/2/5)
B-13: styrene/phenoxyethyl methacrylate/butyl acrylate/acrylic acid copolymer (50/5/20/25)
B-14: styrene/butyl acrylate/acrylic acid copolymer (62/35/3)
B-15: methyl methacrylate/phenoxyethyl acrylate/acrylic acid copolymer (45/51/4)
B-16: methyl methacrylate/phenoxyethyl acrylate/acrylic acid copolymer (45/49/6)
B-17: methyl methacrylate/phenoxyethyl acrylate/acrylic acid copolymer (45/48/7)
B-18: methyl methacrylate/phenoxyethyl acrylate/acrylic acid copolymer (45/47/8)
B-19: methyl methacrylate/phenoxyethyl acrylate/acrylic acid copolymer (45/45/10).

Methods for manufacturing a water-insoluble polymer used for the self-dispersing polymer particles of the present invention are not particularly limited and, for example, the methods of copolymerization by known polymerization methods such as the method of covalent-bonding a surfactant and water-insoluble polymer by carrying out emulsion polymerization in the presence of a polymerizable surfactant, the method of solution-polymerizing monomer mixture including the hydrophilic group-containing monomer and the aromatic group-containing monomer, bulk polymerization method, etc. are exemplified. Among the polymerization methods, from the viewpoint of aggregation speed and droplet ejection stability when prepared as an ink composition, the solution polymerization method is preferred, and the solution polymerization method using an organic solvent is more preferred.

A self-dispersing polymer particle of the present invention preferably includes a polymer synthesized in an organic solvent, the polymer having a carboxy group (the acid value thereof is preferably 25 to 100) and moiety or all of the carboxy groups of the polymer being neutralized, and is prepared as a polymer dispersion by using water as a continuous phase, from the viewpoint of aggregation speed. That is, it is preferred that the manufacturing method of the self-dispersing polymer particle of the present invention include the step of synthesizing a polymer in an organic solvent and the dispersing step of being prepared as an aqueous dispersion in which the carboxy group of the polymer is at least partially neutralized.

The dispersing step preferably includes the following step (1) and step (2).

Step (1): step of stirring a mixture containing a polymer (water-insoluble polymer), an organic solvent, a neutralizer, and an aqueous medium,

Step (2): step of removing the organic solvent from the mixture.

The step (1) is preferably a treatment that includes at first dissolving the polymer (water-insoluble polymer) in the organic solvent and then gradually adding the neutralizer and the aqueous medium, and mixing and stirring them to obtain a dispersion. By adding the neutralizer and the aqueous medium to the solution of the water-insoluble polymer dissolved in the organic solvent, self-dispersing polymer particles having a particle size that enables higher storage stability can be obtained without requiring strong sharing force. The method of stirring the mixture is not particularly limited, and conventional mixing agitators and, if necessary, ultrasonic dispersers or high-pressure homogenizers can be used.

As examples of organic solvents, alcohol-based solvents, ketone-based solvents and ether-based solvents are preferred.

The alcohol-based solvents include isopropyl alcohol, n-butanol, t-butanol, ethanol, etc. The ketone-based solvents include acetone, methyl ethyl ketone, diethyl ketone, methyl isobutyl ketone, etc. The ether-based solvents include dibutyl ether, dioxane, etc. Among these solvents, the ketone-based solvents such as methyl ethyl ketone, etc. and the alcohol-based solvents such as isopropyl alcohol, etc. are preferred. In addition, for the purpose of making a polarity change at the time of the phase transition from an oil-system to an aqueous system mild, it is preferred that isopropyl alcohol and methyl ethyl ketone be used in combination. If the solvents are used in combination, there is no aggregation sedimentation or fusion between particles, and a self-dispersing polymer particle of fine particle size having high dispersion stability can be obtained.

The neutralizer is used to partially or wholly neutralize the dissociative groups so that the self-dispersing polymer can form a stable emulsion state or dispersion state in water. In the case where the self-dispersing polymer of the invention has an anionic dissociative group (for example, a carboxy group) as the dissociative group, examples of the neutralizer to be used include basic compounds such as organic amine compounds, ammonia, and alkali metal hydroxides. Examples of the organic amine compounds include monomethylamine, dimethylamine, trimethylamine, monoethylamine, diethylamine, triethylamine, monopropylamine, dipropylamine, monoethanolamine, diethanolamine, triethanolamine, N,N-dimethylethanolamine, N,N-diethylethanolamine, 2-diethylamino-2-methyl-1-propanol, 2-amino-2-methyl-1-propanol, N-methyldiethanolamine, N-ethyldiethanolamine, monoisopropanolamine, diisopropanolamine, and triisopropanolamine, etc. Examples of the alkali metal hydroxide include lithium hydroxide, sodium hydroxide and potassium hydroxide. Among them, sodium hydroxide, potassium hydroxide, triethylamine, and triethanolamine are preferred from the viewpoint of the stabilization of dispersion of the self-dispersing polymer particles of the invention in water.

The basic compound is used preferably in an amount of from 5 mol% to 120 mol% and, more preferably, from 10 mol% to 110 mol% and, further preferably, from 15 mol% to 100 mol% relative to 100 mol% of the dissociative groups. When the basic compound is used in an amount of 15 mol% or more, the effect of stabilizing the dispersion of the particles in water may be obtained, and when the basic compound is used in an amount of 100mol% or less, the effect of decreasing the water-soluble component may be provided.

In the step (2), an aqueous dispersion of self-dispersing polymer particles can be obtained from the dispersion obtained in the step (1) by distilling away an organic solvent by general method such as distillation under reduced pressure and phase transition to an aqueous system. The organic solvent in the resulting aqueous dispersion is substantially removed, and the amount of the organic solvent is preferably 0.2% by mass or less, and more preferably 0.1 % by mass or less.

The average particle diameter of the resin particles (particularly, self-dispersing polymer particles) is, preferably, in a range of from 10 nm to 400 nm, more preferably in a range of from 10 nm to 200 nm, further preferably, in a range of from 10 nm to 100 nm and, particularly preferably in a range of from 10 nm to 50 nm as the volume average particle diameter. The production adaptability may be improved when the average particle diameter is 10 nm or more. The storage stability may be improved when the average particle diameter is 400 nm or less. The particle diameter distribution of the resin particles is not particularly limited and it may be either a wide particle diameter distribution or a monodispersed particle diameter distribution. Further, two or more types of water-insoluble particles may be used in admixture.

The average particle diameter and the particle diameter distribution of the resin particles can be determined by measuring the volume average particle diameter by means of a dynamic light scattering method using a particle size distribution measuring apparatus NANOTRACK UPA-EX150 (trade name, manufactured by Nikkiso Co., Ltd.).

The content of the resin particles (particularly, self-dispersing polymer particles) in the water-based ink compositin is preferably 1% by mass to 30% by mass, more preferably 5% by mass to 15% by mass relative to the water-based ink composition, from the viewpoint of image glossiness.

The resin particles (particularly, self-dispersing polymer particles) may be used one kind alone or in a combination of two or more kinds of them.

(Water-Soluble Organic Solvent)

It is preferred that a water-based ink composition in the present invention contain a water-soluble organic solvent for the prevention of drying, the acceleration of penetration, and the adjustment of viscosity. In addition, it is also preferable in that the resin particles in the ink composition can be maintained at a low MTF and ejectability can be well maintained by containing a water-soluble organic solvent.

As a water-soluble organic solvent contained in a water-based ink composition, from the viewpoint of adjusting, to the range of 50°C or higher, the temperature difference ($MFT^0$ - $MFT^{25}$) with $MFT^0$ by lowering $MFT^{25}$, a water-soluble organic solvent can be substantially selected as already been described regarding the water-soluble organic solvent contained in an aqueous treatment liquid in the present invention.

In addition, if necessary, other organic solvents may be contained for the prevention of drying, the acceleration of penetration and the adjustment of viscosity.

In the case of using an organic solvent as a drying-preventing agent, when an image is recorded by ejecting an ink composition by an ink-jet method, nozzle clogging, which can be caused by the drying of an ink in an ink ejecting port, can be effectively prevented.

For the prevention of drying, a water-soluble organic solvent having a vapor pressure lower than that of water is preferably used. Examples of the water-soluble organic solvents suitable for the prevention of drying include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane, heterocyclic compounds such as 2-pyrrolidone, N-methyl-2-pyrrolidone, 1,3-dimethyl-2-imidazolidinone, and N-ethylmorpholine, sulfur-containing compounds such as sulfolane, dimethylsulfoxide and 3-sulfolene, polyfunctional compounds such as diacetone alcohol and diethanolamine, and urea derivatives. In particular, polyhydric alcohols such as glycerin and diethylene glycol are preferred.

In order to accelerate the penetration, an organic solvent may be used for better penetration of the ink composition into recording media. Examples of organic solvents suitable for penetration acceleration include alcohols such as ethanol, isopropanol, butanol, and 1,2-hexanediol, sodium lauryl sulfate, sodium oleate, and nonionic surfactants.

Besides the above, a water-soluble organic solvent may also be used to control viscosity. Examples of the water-soluble organic solvents that may be used to control viscosity include alcohols (e.g., methanol, ethanol and propanol), amines (e.g., ethanolamine, diethanolamine, triethanolamine, ethylenediamine, and diethylenetriamine), and other polar solvents (e.g., formamide, N,N-dimethylformamide, N,N-dimethylacetamide, dimethylsulfoxide, sulfolane, 2-pyrrolidone, acetonitrile, and acetone).

(Water)

The water-based ink composition used in the invention includes water. There is no particular limitation as for the content of water. The water-based ink composition may preferably contain water in an amount of 10% by mass to 99% by mass, more preferably from 30% to 80 % by mass, and still more preferably 50% to 70% by mass.

(Other additives)

The water-based ink composition may contain other additives if neccesary, in addition to the components described above. Examples of the other additives that may be used in the invention include conventional additives such as a color fading inhibitor, emulsion stabilizer, permeation accelerator, ultraviolet absorber, preservative, mildew-proofing agent, pH adjusting agent, surface tension regulator, defoamer, viscosity adjusting agent, dispersant, dispersion stabilizer, anti-rust agent and chelating agent. Those various additives may directly be added after preparation of the ink composition, or may be added at the time of preparation of the ink composition.

The surface tension of the ink composition is preferably 20 mN/m to 60 mN/m, more preferably 20 mN/m to 45 mN/m, still more preferably 25 mN/m to 40 mN/m. On the other hand, when an ink is applied by method other than ink-jet method, the range of 20 mN/m to 60 mN/m is preferred, and the range of 30 mN/m to 50 mN/m is more preferred.

The surface tension of the ink composition is measured under a condition of 25°C by a plate method using an Automatic Surface Tensiometer CBVP-Z (trade name, manufactured by Kyowa interface Science Co., Ltd.).

When the ink composition is ejected and applied by ink-jet methods, the viscosity of the ink composition is preferably in the range of from 1 mPa·s to 30 mPa·s, more preferably from 1 mPa·s to 20 mPa·s, further preferably from 2 mPa·s to 15 mPa·s, and particularly preferably from 2 mPa·s to 10 mPa·s, from the viewpoint of ejection stability and the aggregation rate upon contact between the ink composition and the treatment liquid. When the ink composition is applied by methods other than ink-jet methods, the viscosity of the ink composition is preferably in the range of from 1 mPa·s to 40 mPa·s, and more preferably from 5 mPa·s to 20 mPa·s

The viscosity of the ink composition may be measured using, for example, a Brookfield viscometer.

<Ink-Jet Recording Method>

The ink-jet recording method of the present invention has the step of recording an image by applying the above-described water-based ink composition of the present invention on a recording medium by an ink-jet method and the step of applying the above-described aqueous treatment liquid in the present invention on the recording medium.

Furthermore, from the viewpoint of improving image fixation and realizing good scratch resistance, a heating fixation step of fixing the image by bringing the image formed on a recording medium in contact with a heated face can be included.

(Recording Medium)

The ink-jet recording method of the present invention is for recording an image on a recording medium.

The recording medium is not particularly limited, however, coat paper or art paper which is used for general offset printing and known as coated paper can be used. The coat paper or art paper has a coating layer formed by applying coating materials to the surface of wood-free paper and or acid-free paper mainly constituted by cellulose and the surfaces of which are not generally treated.

In case of these general printing papers, when forming an image with a normal water-based ink by an ink-jet method, the absorption or drying of an ink is comparatively slow, and the movement of coloring material can easily occur after the drops land. In addition, there are problems relevant to the image quality such as image blurring or scratch resistance. In the ink-jet recording method of the present invention, since the image blurring or occurrence of density irregularity is suppressed, a homogeneous image can be recorded, and also an image can be recorded in which the scratch resistance is good.

Commercially available coat paper and art paper can be generally used. For example, coated paper for general printing can be used. Specifically, "OK topcoat" (trade name, manufactured by Oji Paper Co., Ltd.), coat paper (A2, B2) such as "AURORA COAT" and "U-LITE" (trade name, manufactured by Nippon Paper Industries Co., Ltd.) and art paper (A1) such as "Tokubishi Art" (trade name, manufactured by Mitsubishi Paper Mills, Ltd.) can be exemplified.

(Treatment liquid-Applying Step)

The treatment liquid-applying step in the present invention is the step of applying the above-described aqueous treatment liquid in the invention on a recording medium.

In the ink-jet recording method of the present invention, either of the treatment liquid-applying step or the image recording step may be carried out first. From the viewpoint of further improving image quality and scratch resistance by highly reducing the occurrence of irregularities when picturing fine lines or minute image portions more precisely and homogeneously or applying an ink in broad range such as solid recording, and, as a result, further raising density uniformity, it is preferred that, when image recording, the image recording step is arranged after the treatment liquid-applying step. Furthermore, when the treatment liquid-applying step employs paper as a recording medium, it is preferable to apply an aqueous treatment liquid by coating, and it is more preferable to apply the aqueous treatment liquid by coating on the entire surface of the paper.

Since the occurrence of curling and cockling, and repelling of ink after recording can effectively be suppressed by arranging the image recording step after the treatment liquid-applying step, an image having good scratch resistance can be recorded.

In the treatment liquid-applying step of the present invention, it is preferable to apply, to coated paper such as art paper or coat paper, -50% to +30% of an aqueous treatment liquid relative to $\Delta V$ [ml/m$^2$] calculated by the following formula (I) :

$$\Delta V = Vi - Vr \qquad \cdots \text{(I)}$$

[Vr: roughness index [ml/m$^2$] of coated paper obtained by measurement of liquid absorption by using Bristow's method, Vi: transition amount [ml/m$^2$] in the bending point where the value of the absorption coefficient in the coated paper changes].

In the present invention, when recording an image layer on coated paper such as art paper or coat paper as a recording medium by using a water-based ink composition and an aqueous treatment liquid including an aggregation agent for aggregating the component of the water-based ink composition, by selecting the amount of the aqueous treatment liquid and applying it upon consideration of the point (bending point) that the absorption quantity when being absorbed from the surface of a coated paper into the inside of the paper changes considerably over time, aggregation

reaction can be effectively employed and the fixation of an image can be carried out quickly. By doing this, surface roughness, that is, the surface of paper is changed, so that the final image is not damaged, and fine lines or minute image portions can be pictured more precisely and homogeneously. In addition, when applying an ink in broad range such as solid recording, etc., an image having high uniform density is obtained by suppressing the occurrence of irregularities, and, at the same time, gloss and scratch resistance (depending on close contact with paper) of an image are improved. In addition, since an image of high density can be recorded, the color reoccurrence characteristics of the image become good.

Here, Bristow's method is a method employed as a method for measuring the amount of liquid absorption in a short time, and is also adopted by the Japan Technical Association of the Pulp and Paper Industry (J' TAPPI). For details of the test method, description of test method No. 51 of paper and pulp of J. TAPPI "Liquid Absorbency Test Method of Paper and Paperboad" (Bristow's method), JAPAN TAPPI JOURNAL 41 (8), 57-61 (1987) can be referred to. Here, it is measured with contact time by using a test device (Bristow's tester) described in the above references, and, at the time of measurement, the head box slit width of Bristow's test is adjusted depending on the surface tension of an ink. In addition, the point that an ink passes through to the back of a sheet of paper is excluded from the calculations.

The roughness index Vr of coated paper such as art paper or coat paper calculated using Bristow's method is the point extrapolated at contact time 0 (zero) and shows the amount of liquid necessary to fill in the unevenness in the paper surface. Vr is a value peculiar to the coated paper regardless of absorption. In addition, it is known that Vr has a high correlation with surface roughness measured by other methods.

In addition, the absorption coefficient shows the proportion of an aqueous treatment liquid that is absorbed over time and is related to the speed of liquid absorption.

When measuring the coated paper using Bristow's method, there is a bending point where the absorption coefficient changes. The bending point, where a value of the absorption coefficient changes, means the point at which an ink permeates the coat layer of a coated paper to the base paper which is the inside layer, and penetration behavior, such as penetration speed when being permeated with a certain absorption coefficient, changes, namely, the point at which, when taking time on the horizontal axis and amount of ink absorption (transition amount) on the vertical axis and expressing the relationship of the transition amount over time, the transition amount lowers or rises after a certain amount of time and the absorption line is bent.

$\Delta V$ calculated by the above formula (1) using the roughness index Vr and transition amount Vi at the bending point is regarded as approximately the quantity of liquid that was absorbed only into the pores of the coat layer.

In the present invention, it is preferred that the amount of an aqueous treatment liquid to be applied be adjusted by the $\Delta V$ of the coated paper which is the recording medium. Specifically, the aqueous treatment liquid is applied in an amount of -50% to+30% of the $\Delta V$ of the coated paper. Above all, the range of -30% to+20% is preferred. In the present invention, from the viewpoint of filling in the pores of coated paper, the application amount is important, and the concentration of the aqueous treatment liquid may by appropriately selected depending on the purpose. The concentration of aggregation agents included in the aqueous treatment liquid are described later.

The higher the application amount of the aqueous treatment liquid, the more the resolution rises, however, if the application amount is too much ($>\Delta V+30\%$), the treatment liquid remains on the paper surface and the surface is coarse, and when recording a solid image, a line stands out, gloss deteriorates and the texture of the coated paper is changed greatly. In addition, if the application amount of the aqueous treatment liquid is too small ($<\Delta V-50\%$), since a base paper layer absorbs too much, aggregation efficiency deteriorates and the resolution of the image worsens. If the application amount is less than $\Delta V-70\%$, the reaction efficiency of the aqueous treatment liquid and an ink deteriorates greatly.

In addition, the application amount of the aqueous treatment liquid is preferably in a range of 0.5 ml/$m^2$ to 3.5 ml/$m^2$.

Known liquid-applying methods for applying an aqueous treatment liquid on paper can be used without particular limitation, and any methods such as spray coating, coating by a coating roller, applying by ink-jet method, immersion, etc. can be selected.

Specific examples of the methods include the size press method represented by the horizontal size press method, the roll coater method, the calender size press method; the knife coater method represented by the air knife coater method; the roll coater method represented by transfer roll coater methods such as the gate roll coater method, etc., the direct roll coater method, the reverse roll coater method, the squeeze roll coater method, etc.; the building blade coater method, the short dual coater method; the blade coater method represented by the two-stream coater method, etc.; the bar coater method represented by the rod bar coater, etc.; the cast coater method; the gravure coater method; the curtain coater method; the die coater method; the brush coater method; the transfer method, etc.

In addition, like a coater described in JP-A No. 10-230201, it may be a method wherein the coated amount is controlled by using a coater equipped with a member restraining the amount of liquid.

In the present invention, an aqueous treatment liquid-applying area may be a full-scale application which is applied to the whole record surface of the recording medium, or a partial application which is partially applied in the area

wherein an ink composition is landed by drops in an image recording step. In the present invention, from the viewpoint of adjusting the application amount of the aqueous treatment liquid uniformly, recording fine lines or minute image portions homogeneously and suppressing density irregularities such as an image irregularity, full-scale application, which is applied to the whole record surface of the recording medium using a coating roller or the like, is preferable.

The application amount of an aggregation agent included in the above-described aqueous treatment liquid in the present invention is not particularly limited as far as if it is sufficient for stabilizing an water-based ink, and, when applied to a recording medium, 0.25 g/$m^2$ or more is preferred. In addition, regarding the point of ease of fixing the water-based ink by aggregation, it is preferably 0.30 g/$m^2$ or more but less than 2.0 g/$m^2$ and more preferably 0.40 g/$m^2$or more but less than 1.0 g/$m^2$.

For method of applying an aqueous treatment liquid by controlling the application amount of an aggregation agent to be in this range, for example, a method using an Anilox roller is exemplified. An Anilox roller is a roller having a shape such as a pyramid or a slanted line, or a turtle carapace wherein the surface of the roller on which a ceramic is sprayed is processed with a laser. If an aqueous treatment liquid is inserted into a dent portion adhered to the roller surface and placed in contact with the paper face, it is transferred and an application amount controlled by the dents of the Anilox roller is applied.

(Drying-Removing Step)

In the present invention, after applying aqueous treatment liquid in the treatment liquid-applying step, a drying-removing step is preferably arranged wherein a solvent included in the aqueous treatment liquid is removed by drying. Since a solvent in an aqueous treatment liquid is removed by drying after applying the aqueous treatment liquid, the occurrence of curling, cockling or repelling of ink can effectively be suppressed and the scratch resistance of a recorded image can be further improved. Consequently, superior image recording can be carried out.

The drying-removing step is not particularly limited as far as at least a part of a solvent (for example, water or water-soluble organic solvent) included in an aqueous treatment liquid can be removed. The drying-removing step can be carried out, for example, by a drying method such as heating or ventilation (exposure to dry air).

(Image Recording Step)

An image recording step of the present invention is the step of applying the above-described water-based ink composition of the present invention on a recording medium using an ink-jet method.

Specifically, an image recording using the ink-jet method forms a colored image by ejecting an ink composition onto a desired recording medium by applying energy. In addition, as a preferable ink-jet recording method for the present invention, the method described in paragraph numbers 0093 to 0105 of JP-A No. 2003-306623 can be used.

The ink-jet method is not particularly limited and may be of any known system, for example, a charge control system of ejecting an ink utilizing an electrostatic attraction force, a drop on demand system of utilizing a vibration pressure of a piezo element (pressure pulse system), an acoustic ink-jet system of converting electric signals into acoustic beams, irradiating them to an ink, and ejecting the ink utilizing a radiation pressure, and a thermal ink-jet system of heating an ink to form bubbles and utilizing the resulting pressure (BUBBLEJET (registered trade mark)). As the ink-jet method, an ink-jet method described in JP-A No. 54-59936 of causing abrupt volume change to an ink that undergoes the action of thermal energy, and ejecting the ink from a nozzle by an operation force due to the change of state can be utilized effectively.

Examples of the ink-jet method include a system of injecting a number of ink droplets of low concentration, a so-called "photo-ink" each in a small volume, a system of improving an image quality using plural inks of a substantially identical hue and of different concentrations, and a system of using a colorless and transparent ink.

The ink-jet head used in the ink-jet method may be either an on-demand system or a continuous system. The ejection system includes, specifically, for example, an electric-mechanical conversion system (for example, single cavity type, double cavity type, bender type, piston type, share mode type, shared wall type, etc.), an electric-thermal conversion system (for example, thermal ink-jet type, BUBBLEJET (registered trade mark) type, etc.), an electrostatic attraction system (for example, electric field control type, and slit jet type, etc.), and an electric discharge system (for example, spark jet type, etc.) and any of the ejection systems may be used.

Ink nozzles, etc. used for recording by the ink-jet method are not particularly limited but can be selected properly depending on the purpose.

(Heating-Fixing Step)

In the present invention, after the image recording step, it is preferable to arrange the heating-fixing step of placing an ink image formed by landing drops of an ink composition in contact with a heated face and fixing it. Since an

image is fixed well onto a recording medium by heating-fixing, the scratch resistance of an image can be more improved.

Heating is preferably carried out at a temperature equal to or higher than the glass transition temperature (Tg) of a resin particle in an image. Since the particle is heated at the temperature equal to or higher than Tg, a thin film is formed and an image is reinforced. Heating is carried out at a temperature of 70°C or higher. The temperature range of Tg+10°C or higher is preferred. Specifically, the range of the heating temperature is preferably 70 to 150°C, more preferably 70°C to 130°C, and still more preferably 70°C to 100°C.

For surface smoothing, the pressure applied together with the heat is preferably in the range of from 0.1 MPa to 3.0 MPa, more preferably from 0.1 MPa to 1.0 MPa, and further preferably from 0.1 MPa to 0.5 MPa.

The heating method is not particularly limited, however, it can suitably include noncontact drying methods such as a method of heating with the heating element such as a nichrome wire heater, a method of supplying warm air or hot air, and a method of heating with a halogen lamp, an infrared lamp, etc. In addition, the heating and pressurizing method is not particularly limited, however, for example, it can suitably include a heating and fixing method by contact, such as method of pressing a heat board onto an image-formed surface of a recording medium; or a method of using a heating and pressurizing apparatus equipped with a pair of heating and pressurizing rollers, a pair of heating and pressurizing belts, or a heating and pressurizing belt arranged on an image-recorded surface side of the recording medium and a maintaining roller arranged on the opposite side of the belt and passing a pair of rollers, etc.

In a case of applying heat and pressure, a preferred nip time is from 1 msec to 10 sec, more preferably, from 2 msec to 1 sec and, further preferably, from 4 msec to 100 sec. Further, a nip width is, preferably, from 0.1 mm to 100 mm, more preferably, from 0.5 mm to 50 mm and, further preferably, from 1 mm to 10 mm.

The heating and pressurizing roller may be a metal roller made of metal or include a metal core and an elastic material coating layer provided around the core, or if necessary, a surface layer (also referred to as "release layer"). In the latter case, for example, the metal core may be a cylindrical member made of iron, aluminum, SUS, or the like, and at least part of the surface of the metal core is preferably covered with the coating layer. In particular, the coating layer is preferably made of a silicone resin or fluororesin having releasability. A heating element is preferably incorporated in the metal core of one of the heating and pressurizing rollers. The recording medium may be allowed to pass between the rollers so that heating and pressurizing can be performed at the same time, or if necessary, two heating rollers may be used to heat the recording medium between them. For example, the heating element is preferably a halogen lamp heater, a ceramic heater, a Nichrome wire heater, or the like.

The belt substrate to form the heating and pressurizing belt for use in the heating and pressurizing apparatus is preferably a seamless electroformed nickel substrate, and the thickness of the substrate is preferably from 10 μm to 100 μm. Besides nickel, aluminum, iron, polyethylene, or the like may also be used to form the belt substrate. When the silicone resin or fluororesin is used, the layer made of the resin preferably has a thickness of from 1 μm to 50 μm, more preferably from 10 μm to 30 μm.

In addition, to realize the pressure (nip pressure), for example, elastic members such as springs having tension may be selected and installed in both ends of the rollers such as the heating and pressurizing rollers so that desired nip pressure is provided in consideration of the nip gap.

The transportation speed of the recording medium when using the heating and pressurizing roller or the heating and pressurizing belt is preferably in a range of 200 mm/sec to 700 mm/sec, more preferably from 300 mm/sec to 650 mm/sec and still more preferably from 400 mm/sec to 600 mm/sec.

(Other Steps)

The ink-jet recording method of the present invention can arrange other steps as well as the above-described treatment liquid-applying step and image recording step, if necessary.

The other steps are not particularly limited, and, for example, an ink drying step of drying and removing an organic solvent in an ink applied to art paper or coat paper can be appropriately selected depending on its purpose.

The ink drying step can be constituted like the drying-removing step that can be arranged after the above-described treatment liquid-applying step, and as far as it is a method of drying-removing at least a part of the solvent in an ink, it is not particularly limited. Specifically, the ink-drying step may be performed by using generally-used method such as heating or ventilation (supplying dry air) with respect to the image portion. This ink-drying step is preferably arranged after the image recording step, from the viewpoint of suppression of occurrence of curling or cockling as well as from the viewpoint of the scratch resistance of an image.

EXAMPLES

The invention will be described in detail by way of examples, but the invention is not limited to the following examples so long as they are within the gist of the invention. Unless otherwise specified, "part" is based on mass.

The weight average molecular weight was measured by gel permeation chromatography (GPC). In GPC, HLC-8220GPC (trade name, manufactured by Tosoh

Corporation) was used, and 3 pieces of columns, TSKgel Super HZM-H, TSK gel SuperHZ4000 and TSKgel SuperHZ2000 connected in series (trade name, all manufactured by Tosoh Corporation) were used as the column, and THF (tetrahydrofuran) was used as an eluate. Further, the measurement was performed by using an IR detector under the conditions at a sample concentration of 0.45% by mass, a flow rate of 0.35 mL/min, a sample ejection amount of 10 μL, and a measuring temperature of 40°C. A calibration curve was prepared based on eight samples of "standard sample TSK: standard, polystyrene" of "F-40", "F-20", "F-4", "F-1", "A-5000", "A-2500", "A-1000", and "n-propylbenzene" manufactured by Tosoh Corporation.

Example 1

(Preparation of Water-based Ink)

Synthesis of Polymer Dispersant P-1

A polymer dispersant P-1 was synthesized as shown below according to the following scheme:

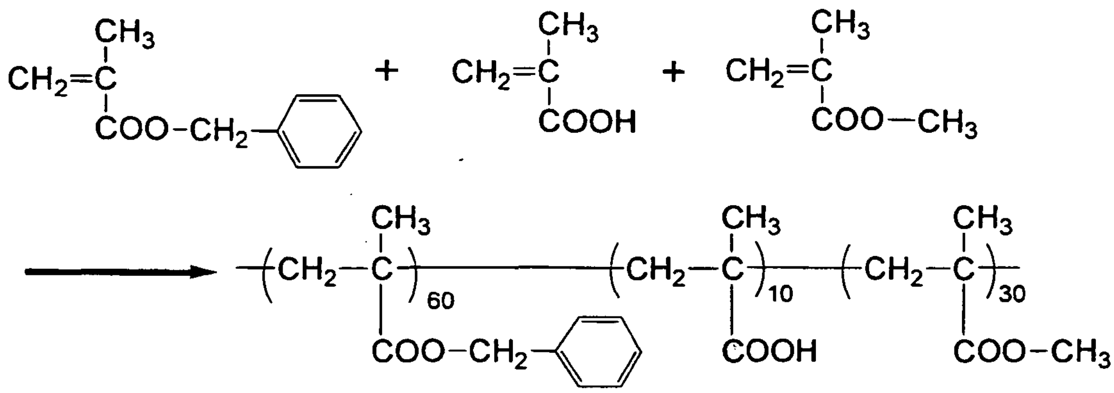

P-1

88 g of methyl ethyl ketone was put in a 1000 mL three-necked flask equipped with a stirrer and a cooling tube and heated to 72°C in a nitrogen atmosphere, to which a solution in which 0.85 g of dimethyl 2,2'-azobisisobutyrate, 60 g of benzyl methacrylate, 10g of methacrylic acid, and 30 g of methyl methacrylate were dissolved in 50 g of methyl ethyl ketone was added dropwise over 3 hr. After completing the addition and further allowing the mixture to react for 1 hr, a solution in which 0.42 g of dimethyl 2,2'-azobisisobutyrate was dissolved in 2 g of methyl ethyl ketone was added, and the mixture was heated for 4 hr while elevating the temperature to 78°C. The obtained reaction solution was re-precipitated twice in a great excess amount of hexane and a precipitated resin was dried, thereby obtaining 96 g of a polymer dispersant P-1.

The composition of the obtained resin was confirmed by $^1$H-NMR, and the weight average molecular weight (Mw) determined by GPC was 44,600. Further, when an acid value was determined according to the method described in JIS standards (JISK0070:1992, the disclosure of which is incorporated by reference herein), the obtained resin was revealed having an acid value of 65.2 mgKOH/g.

(Preparation of Dispersion C of Resin-Coated Pigment Particles)

Ten parts of Pigment Blue 15:3 (Phthalocyanine Blue A220 (trade name), a cyan pigment, manufactured by Dainichiseika Color & Chemicals Mfg, Co., Ltd.), 5 parts of the polymer dispersant P-1, 42 parts of methyl ethyl ketone, 5.5 parts of an aqueous 1 N NaOH solution, and 87.2 parts of ion-exchanged water were mixed and dispersed with 0.1 mmϕ zirconia beads for 2 hours to 6 hours in a bead mill.

Methyl ethyl ketone was removed from the resulting dispersion under reduced pressure at 55°C. After part of the water was further removed, the dispersion was centrifuged at 8,000 rpm for 30 minutes using a 50 mL centrifuge tube in a high-speed centrifugal refrigerating machine 7550 (trade name, manufactured by KUBOTA Manufacturing Corporation), and the supernatant separated from the precipitate was collected. The pigment concentration was then determined from the absorption spectrum. As a result, a dispersion C of resin-coated pigment particles (the pigment coated with the polymer dispersant) was obtained, whose pigment concentration was 10.2 % by mass.

(Preparation of Dispersion M of Resin-Coated Pigment Particles)

A dispersion M of resin-coated pigment particles (a polymer dispersant-coated pigment) was prepared using the process of preparing the dispersion C of the resin-coated pigment particles, except that Pigment Red 122 (a magenta pigment) was used in place of Pigment Blue 15:3 (a cyan pigment).

(Preparation of Dispersion Y of Resin-Coated Pigment Particles)

A dispersion Y of resin-coated pigment particles (a polymer dispersant-coated pigment) was prepared using the process of preparing the dispersion C of the resin-coated pigment particles, except that Pigment Yellow 74 (a yellow pigment) was used in place of Pigment Blue 15:3 (a cyan pigment).

(Preparation of Dispersion K of Resin-Coated Pigment Particles)

A dispersion K of resin-coated pigment particles (a polymer dispersant-coated pigment) was prepared using the process of preparing the dispersion C of the resin-coated pigment particles, except that carbon black (NIPEX 160-IQ (trade name), a black pigment, manufactured by Degussa) was used in place of Pigment Blue 15: 3 (a cyan pigment).

(Preparation of Self-Dispersing Polymer Fine Particles)

Synthesis Example 1

To a 2 L three-necked flask equipped with a stirrer, a thermometer, a reflux condenser tube, and a nitrogen gas introducing tube, 360.0 g of methyl ethyl ketone was added, and heated to 75°C. A mixture solution of 180 g of methyl methacrylate, 32.4 g of methoxyethyl acrylate, 126.0 g of benzyl methacrylate, 21.6 g of methacrylic acid, 72 g of methyl ethyl ketone, and 1.44 g of V-601 (trade name, manufactured by Wako Pure Chemical Industries, Ltd.) was added dropwise thereto at a constant velocity such that the addition could be completed in 2 hours. After the addition was completed, a solution of 0.72 g of V-601 and 36.0 g of methyl ethyl ketone was added and stirred at 75°C for 2 hours. A solution of 0.72 g of V-601 and 36.0 g of methyl ethyl ketone was further added and stirred at 75°C for 2 hours. The mixture was then heated to 85°C and further stirred for 2 hours, so that a methyl methacrylate/methoxyethyl acrylate/benzyl methacrylate/methacrylic acid (50/9/35/6 in mass ratio) copolymer resin solution was obtained.

The weight average molecular weight (Mw) of the resulting copolymer was 66,000 (determined as a polystyrene-equivalent molecular weight by gel permeation chromatography (GPC)).

Then, 668.3 g of the resulting resin solution was weighed out and placed in a reaction vessel, and 388.3 g of isopropanol and 145.7 ml of an aqueous 1 mol/L NaOH solution were added thereto. The temperature in the reaction vessel was raised to 80°C. Then, 720.1 g of distilled water was added dropwise to the mixture at a rate of 20 ml/minute to form an aqueous dispersion. The aqueous dispersion was kept under the atmospheric pressure in the reaction vessel at a temperature of 80°C for 2 hours, 85°C for 2 hours and 90°C for 2 hours. Thereafter, the pressure in the reaction vessel was reduced, and isopropanol, methyl ethyl ketone and distilled water were removed in a total amount of 913.7 g by distillation, so that an aqueous dispersion B-01Lx of self-dispersing polymer fine particles (B-01) was obtained, which had a solids content of 28.0%.

$MFT^0$ of the resulting aqueous dispersion B-01Lx and $MFT^{25}$ of the self-dispersing polymer fine particle (B-01) were measured by the following method. The measured values are shown in the following Table 2b.

(1) $MFT^0$ (MFT in an aqueous dispersion): this is measured by using MFT-measuring instrument manufactured by YOSHIMITU SEIKI Co. Ltd. Specifically, each resulting aqueous dispersion was adjusted to have a concentration of 25% by mass, then this was blade-applied with length 50 cmxwidth 3 cm on PET film (with 64 cm×18 cm) so that the thickness of applied film was 300μm, a temperature gradient of 12°C to 65°C was applied on the applied film by heating the backside of the PET film, and the film was dried under an environment of 20°C and 22%RH for 4 hours. Subsequently, the border temperature [°C] between the temperature wherein a white powdery deposit was produced and the temperature wherein a transparent film was formed was measured, and this was regarded as minimum film-forming temperature ($MFT^0$).

(2) $MFT^{25}$ (MFT in a mixture liquid containing a water-soluble organic solvent in an amount of 25% by mass) : this was calculated by substantially the same method as that of the (1) $MFT^0$, so that the MFT was obtained, except that, in the measuring method of (1) $MFT^0$, the aqueous solution of 25% by mass (solid) of the self-dispersing polymer fine particle (B-01), 6.25% by mass (total weight) of solvents used for each ink described in Table 2a, and 68.75% by mass of water was prepared, and the solution was substituted for an aqueous dispersion.

Synthesis Example 2

A methyl methacrylate/methoxyethyl acrylate/benzyl methacrylate/methacrylic acid (55/4/35/6 in mass ratio) copolymer resin solution and an aqueous dispersion B-02Lx of self-dispersing polymer fine particles (B-02) with a solids content of 28.0% were obtained using the process of Synthesis Example 1, except that the ratio between methyl methacrylate, methoxyethyl acrylate, benzyl methacrylate, and methacrylic acid in the synthesis of self-dispersing polymer fine particles (B-01) was changed.

The weight average molecular weight (Mw) of the resulting copolymer was 77, 000 (determined as a polystyrene-equivalent molecular weight by Gel Permeation Chromatography (GPC)). In addition, the $MFT^0$ of the resulting aqueous dispersion B-02Lx, and the $MFT^{25}$ of the self-dispersing polymer fine particles (B-02) were measured by substantially the same method as described in the above. The measured values are shown in the following Table 2b.

Synthesis Example 3

A methyl methacrylate/methoxyethyl acrylate/benzyl methacrylate/methacrylic acid (39/20/35/6 in mass ratio) copolymer resin solution and an aqueous dispersion B-03Lx of self-dispersing polymer fine particles (B-03) with a solids content of 28.0% were obtained using the process of Synthesis Example 1, except that the ratio between methyl methacrylate, methoxyethyl acrylate, benzyl methacrylate, and methacrylic acid in the synthesis of self-dispersing polymer fine particles (B-01) was changed.

The weight average molecular weight (Mw) of the resulting copolymer was 70,000 (determined as a polystyrene-equivalent molecular weight by Gel Permeation Chromatography (GPC)). In addition, the $MFT^0$ of the resulting aqueous dispersion B-03 Lx, and the $MFT^{25}$ of the self-dispersing polymer fine particles (B-03) were measured by substantially the same method as described in the above. The measured values are shown in the following Table 2b.

Synthesis Example 4

A methyl methacrylate/methoxyethyl acrylate/benzyl methacrylate/methacrylic acid (44/15/35/6 in mass ratio) copolymer resin solution and an aqueous dispersion B-04Lx of self-dispersing polymer fine particles (B-04) with a solids content of 28.0% were obtained using the process of Synthesis Example 1, except that the proportion between methyl methacrylate, methoxyethyl acrylate, benzyl methacrylate, and methacrylic acid in the synthesis of the self-dispersing polymer fine particles (B-01) of Synthesis Example 1 was changed.

The weight average molecular weight (Mw) of the resulting copolymer was 77,000 (determined as a polystyrene-equivalent molecular weight by Gel Permeation Chromatography (GPC)). In addition, the $MFT^0$ of the resulting aqueous dispersion B-04Lx, and the $MFT^{25}$ of the self-dispersing polymer fine particles (B-04) were measured by substatially the same method as described in the above. The measured values are shown in the following Table 2b.

Preparation of Water-based ink

Materials used were the pigment particle dispersions obtained as described above (the cyan dispersion C, the magenta dispersion M, the yellow dispersion Y, and the black dispersion K), the dispersion B-01Lx of the self-dispersing polymer fine particles (B-01), the dispersion B-02Lx of the self-dispersing polymer fine particles (B-02), the dispersion B-03Lx of the self-dispersing polymer fine particles (B-03) and the dispersion B-04Lx of the self-dispersing polymer fine particles (B-04). Each set of components were mixed to form the ink composition shown below so that water-based ink of each color was prepared. The resulting water-based ink was charged into a disposable plastic syringe and then filtrated through a polyvinylidene fluoride (PVDF) filter with a pore size of 5 μm (Millex-SV (trade name), 25 mm in diameter, manufactured by Millipore Corporation) to give a final ink product.

(Composition of Cyan Ink C-1)

- · Cyan pigment (Pigment·Blue 15:3) : 4% by mass
- · The polymer dispersant P-1 (solid) : 2% by mass
- · The aqueous dispersion B-01Lx (solid) of the self-dispersing polymer fine particle B-01 : 4% by mass
- · Glycerin (water-soluble organic solvent) : 8% by mass
- · Tripropylene glycol monomethyl ether (TPGmME) (manufactured by Wako Pure Chemicals Industries, Ltd., water-soluble organic solvent) : 8% by mass
- · OLFINE E1010 (trade name, manufactured by Nissin Chemical Industry Co., Ltd., surfactant : 1% by mass

· Ion-exchanged water : 73% by mass

(Composition of Cyan Ink C-2)

It was substantially the same composition as the Cyan Ink C-1, except that the aqueous dispersion B-01Lx of the self-dispersing polymer fine particle B-01 in the composition of the ink C-1 was replaced with the aqueous dispersion B-02Lx of the self-dispersing polymer fine particle B-02.

(Composition of Cyan Ink C-3)

It was substantially the same composition as the Cyan Ink C-1, except that that the aqueous dispersion B-01Lx of the self-dispersing polymer fine particle B-01 in the composition of the ink C-1 was replaced with an aqueous dispersion B-03Lx of the self-dispersing polymer fine particle B-03.

(Composition of Cyan Ink C-4)

It was substantially the same composition as the Cyan Ink C-1, except that that the aqueous dispersion B-01 Lx of the self-dispersing polymer fine particle B-01 in the composition of the ink C-1 was replaced with an aqueous dispersion B-04Lx of the self-dispersing polymer fine particle B-04.

(Composition of Magenta Ink M-1)

It was substantially the same composition as the Cyan Ink C-1, except that the cyan pigment in the composition of the ink C-1 was replaced with a magenta pigment (Pigment·Red 122) so that the amount of the pigment was the same.

(Composition of Yellow Ink Y-1)

It was substantially the same composition as the Cyan Ink C-1, except that the cyan pigment in the composition of the ink C-1 was replaced with a yellow pigment (Pigment·Yellow 74) so that the amount of the pigment was the same.

(Composition of Black Ink K-1)

It was substantially the same composition as the Cyan Ink C-1, except that the cyan pigment in the composition of the ink C-1 was replaced with a black pigment (carbon black) so that the amount of the pigment was the same.

The surface tension, viscosity, volume average particle size and pH of each of the water-based inks as described above were measured. The physical property values are shown in the following Table 1.

The surface tension was measured under a condition of 25°C by the Wilhelmy method using a platinum plate by using Automatic Surface Tensiometer CBVP-Z (trade name, manufactured by Kyowa Interface Science Co., Ltd.).

The viscosity was measured under a condition of 30°C by using VISCOMETER TV-22 (trade name, manufactured by Toki Sangyo Co., Ltd.).

The volume average particle size was measured on all of the resulting water-based inks, which were diluted to concentrations suitable for measurement, under the same measurement conditions by dynamic light scattering method by using NANOTRAC UPA-EX150 (trade name, manufactured by Nikkiso Co., Ltd.) as an ultrafine particle viscosity distribution measurement device.

The pH of an undiluted solution of an water-based ink was measured at 25°C by using pH Meter WM-50 EG (trade name, manufactured by DKK-TOA Corporation).

Table 1

| | Surface Tension [mN/m] | Viscosity [mPa·s] | Volume Average Particle Size [μm] | pH |
|---|---|---|---|---|
| Cyan Ink C-1 | 35.2 | 4.2 | 98 | 8.8 |
| Cyan Ink C-1 | 35.4 | 4.3 | 100 | 8.8 |
| Cyan Ink C-1 | 35.4 | 4.2 | 101 | 8.8 |
| Cyan Ink C-1 | 35.4 | 4.2 | 96 | 8.8 |
| Magenta Ink M-1 | 35.2 | 4.2 | 90 | 8.6 |

(continued)

| | Surface Tension [mN/m] | Viscosity [mPa·s] | Volume Average Particle Size [μm] | pH |
|---|---|---|---|---|
| Yellow Ink Y-1 | 35.2 | 4.2 | 90 | 8.7 |
| Black Ink K-1 | 35.2 | 4.2 | 85 | 8.7 |

<Preparation of Aqueous Treatment liquid>

The treatment liquids A to H were prepared as follows. In addition, surface tension, viscosity, and pH were measured by substantially the same method as the above.

(Preparation of Treatment liquid A)

The treatment liquid A was prepared by mixing each component having the following composition. Physical property values of the treatment liquid A were surface tension of 37.5, viscosity of 3.8 and pH of 1.2.

· Malonic acid (divalent carboxylic acid, manufactured by Wako Pure Chemicals Industries, Ltd.) : 25.0% by mass
· SANNIX GP250 (trade name, manufactured by Sanyo Chemical Industries, Ltd., water-soluble organic solvent) : 20.0% by mass
· Sodium N-oleoyl-N-methyltaurin (surfactant) : 1.0% by mass
· Ion-exchanged water : 54.0% by mass

(Preparation of Treatment liquid B)

The treatment liquid B was prepared by mixing each component having the following composition. Physical property values of the treatment liquid B were surface tension of 37.5, viscosity of 3.2 and pH of 1.2.

· Malonic acid (divalent carboxylic acid, manufactured by Wako Pure Chemicals Industries, Ltd.) : 25.0% by mass
· Tripropylene glycol monomethyl ether (TPGmME) : 20.0% by mass
· Sodium N-oleoyl-N-methyltaurin (surfactant) : 1.0 %by mass
· Ion-exchanged water : 54.0 %by mass

(Preparation of Treatment liquid C)

The treatment liquid C was prepared by mixing each component having the following composition. Physical property values of the treatment liquid C were surface tension of 37.5, viscosity of 3.0 and pH of 1.2.

· Malonic acid (divalent carboxylic acid, manufactured by Wako Pure Chemicals Industries, Ltd.) : 25.0% by mass
· Triethylene glycol monobutyl ether (TEGmBE) : 20.0% by mass
· Sodium N-oleoyl-N-methyltaurin (surfactant) : 1.0% by mass
· Ion-exchanged water : 54.0% by mass

(Preparation of Treatment liquid D)

The treatment liquid D was prepared by mixing each component having the following composition. Physical property values of the treatment liquid D were surface tension of 37.5, viscosity of 2.8 and pH of 1.2.

· Malonic acid (divalent carboxylic acid, manufactured by Wako Pure Chemicals Industries, Ltd.) : 25.0% by mass
· Diethyleneglycol monoethyl ether (DEGmEE) : 20.0% by mass
· Sodium N-oleoyl-N-methyltaurin (surfactant) : 1.0% by mass
· Ion-exchanged water : 54.0% by mass

(Preparation of Treatment liquid E)

The treatment liquid E was prepared by mixing each component having the following composition. Physical property values of the treatment liquid E were surface tension of 37.5, viscosity of 3.2 and pH of 1.2.

· Malonic acid (divalent carboxylic acid, manufactured by Wako Pure Chemicals Industries, Ltd.) : 25.0% by mass
· SANNIX GP250 (trade name, manufactured by Sanyo Chemical Industries, Ltd., hydrophilic organic solvent) : 13.3% by mass
· Tripropylene glycol monomethyl ether (TPGmME) : 6.7% by mass
· Sodium N-oleoyl-N-methyltaurin (surfactant) : 1.0% by mass
· Ion-exchanged water : 54.0% by mass

(Preparation of Treatment liquid F)

The treatment liquid F was prepared by mixing each component having the following composition. Physical property values of the treatment liquid F were surface tension of 37.5, viscosity of 2.6 and pH of 1.2.

· Malonic acid (divalent carboxylic acid, manufactured by Wako Pure Chemicals Industries, Ltd.) : 25.0% by mass
· Diethyleneglycol monomethyl ether (DEGmME) : 20.0% by mass
· Sodium N-oleoyl-N-methyltaurin (surfactant) : 1.0% by mass
· Ion-exchanged water : 54.0% by mass

(Preparation of Treatment liquid G)

The treatment liquid G was prepared by mixing each component having the following composition. Physical property values of the treatment liquid G were surface tension of 37.5, viscosity of 3.2 and pH of 1.2.

· Malonic acid (divalent carboxylic acid, manufactured by Wako Pure Chemicals Industries, Ltd.) : 25.0% by mass
· Glycerin : 20.0% by mass
· Sodium N-oleoyl-N-methyltaurin (surfactant) : 1.0% by mass
· Ion-exchanged water : 54.0% by mass

(Preparation of Treatment liquid H)

The treatment liquid H was prepared by mixing each component having the following composition. Physical property values of the treatment liquid H were surface tension of 37.5, viscosity of 3.8 and pH of 1.2.

· Malonic acid (divalent carboxylic acid, manufactured by Wako Pure Chemicals Industries, Ltd.) :25.0% by mass
· SANNIX GP400 (trade name, manufactured by Sanyo Chemical Industries, Ltd., water-soluble organic solvent) : 20.0% by mass
· Sodium N-oleoyl-N-methyltaurin (surfactant) : 1.0% by mass
· Ion-exchanged water : 54.0% by mass

<Image Recording and Evaluation>

As shown below, an image was recorded, and, at the same time, evaluated. The results of evaluation are shown in the following Table 2b.

(Image Recording)

As a recording medium, as shown in the following Table 2a, U-LITE (trade name, basis weight 104.7 g/$m^2$), Tokubishi Art (trade name, basis weight 104.7 g/$m^2$) and OK topcoat + (trade name, basis weight 104.7 g/$m^2$) were prepared, and an image was recorded by the following method by changing the kind and the application amount of the aqueous treatment liquid as shown in the following Table 2a.

[Droplet Ejection Method]

By using, as an water-based ink, the resulting cyan pigment ink C, magenta pigment ink M, yellow pigment ink Y and black pigment ink K with the aqueous treatment liquids shown in the following Table 2a, the recordings of a line image and a solid image were carried out by four-colored single pass recording. Subsequently, the line image was recorded by ejecting lines with a width of 1 dot, lines with a width of 2 dots and lines with a width of 4 dots of 1200 dpi by a single pass in the main scanning direction, and the solid image was solid-recorded by ejecting an water-based ink on the entire surface of the sample recording medium which was cut to size A5. In addition, the various recording conditions are as follows.

[Recording]

(1) Treatment liquid-Applying Step

First, a treatment liquid was applied, on the entire face of the recording face side of a recording medium, with a roll coater which controls the application amount using an Anilox roller (trade name, the number of lines: 100 to 300/inch) so that the application amounts were the values shown in the following Table 2b.

(2) Drying-Removing Step

Next, a recording medium, on which a treatment liquid was applied, was dried under the following conditions.

· Air Velocity: 15 m/s
· Temperature: being heated with contact-type plane heater on the opposite side (back side) of the recording face of a recording medium so that the surface temperature of the recording face side of the recording medium is 60°C.
· Ventilation Domain: 450 mm (drying time 0.7 second).

(3) Image Recording Step

Subsequently, an water-based ink was ejected, under the following conditions using an ink-jet method, on the application face (recording face) of a recording medium on which an aqueous treatment liquid was applied, and a line image and a solid image were recorded.

· Head: a piezo full-line head of 1200 dpi/width 20 inch arranged with four colors
· Amount of Ejecting Droplets: 4 value records of 0 pL, 2.0 pL, 3.5 pL, 4.0 pL
· Driving Frequency: 30 kHz (transportation speed of the recording medium: 635 mm/sec).

(4) Ink Drying Step

Subsequently, a recording medium on which an water-based ink was applied was dried under the following conditions.

· Drying Method: ventilation drying
· Air Velocity: 15 m/s
· Temperature: being heated with a contact-type plane heater on the opposite side (back side) of the recorded face of a recording medium so that the surface temperature of the recorded face side of the recording medium is 60°C.
· Ventilation Domain: 640 mm (drying time: 1 second).

(5) Fixing Step

Subsequently, fixation treating by heating was carried out by passing a pair of rollers under the following conditions.

· Silicone Rubber Roller (hardness 50°, nip width 5 mm)
· Roller Temperature: fixation temperature shown in Table 2b
· Pressure: 0.8 MPa.

The line image and the solid image recorded by the method were subjected to the following evaluation. The

results of evaluation are shown in the following Table 2b.

(Density Irregularity)

A uniform image portion that was prepared by solid-recording a cyan pigment ink C on a solid image of a magenta pigment ink M, was observed, and the degree of density unevenness was evaluated by the following evaluation criteria.

<Evaluation Criteria>

A: No unevenness is seen, and the density of a solid portion is uniform.
B: Slight unevenness is seen in places, but is not of a level problematic for practical use.
C: Unevenness occurs, and is of the minimum level acceptable for practical use.
D: Remarkable unevenness occurs, and is of a level having extremely low utility.

(Scratch Resistance)

Immediately after recording, a sheet of the recording medium (the same recording medium as that used for recording (hereinafter, referred to as an unused sample in this evaluation)) that had not been recorded on, was placed over a 2 cm square solid portion of a sheet of the recording medium on which a solid image was recorded, and rubbed ten times forwards and backwards with a load of 200 kg/$m^2$. The degree of transfer of ink to a plain part of the unused sample was observed, and was evaluated by the following evaluation criteria.

<Evaluation Criteria>

A: There is no transfer of the ink at all.
B: Almost no transfer of the ink is seen.
C: Ink transfer is seen to some extent, and is of the minimum level acceptable for practical use.
D: Ink transfer is remarkable, and is of a level having extremely low utility.

(Blocking Resistance)

A uniform image portion that was prepared by solid-recording a cyan pigment ink C on a solid image of a magenta pigment ink M was cut to a size of 3.5 cmx4 cm, then the evaluation sample was placed on an acrylic board of 10 cmx 10 cm so that the recorded surface faced upwards, then a sample recorded in the same way was placed on this evaluation sample so that recorded surfaces overlapped each other and, further, 10 cmx 10 cm of an acrylic board was placed thereon. The resulting sample set was kept under environmental conditions of 55°C and 40%RH for 10 hours. Thereafter, a weight of 1 kg was placed on the acrylic board on the top and further kept there for 24 hours (equivalent to a load of 700 kg/$m^2$). Furthermore, after having been kept under environmental conditions of 25°C and 50%RH for 2 hours, the evaluation sample was peeled off. The ease of peeling at this time and color transfer after peeling were observed, and were evaluated by the following evaluation criteria.

<Evaluation Criteria>

A: Peeling is achieved smoothly and no color transfer is seen between sheets of paper.
B: There is some stickiness, and some color transfer is seen, between sheets of paper.
C: There is strong stickiness, and a large amount of color transfer, between sheets of paper, to a degree that has an extremely low level of utility.

Table 2a

| | Ink | Resin Particle | Recording Medium | | Aqueous Treatment liquid | | | | | |
|---|---|---|---|---|---|---|---|---|---|---|
| | | | Kind | $\Delta V$ | Kind (Treating Liquid) | Application Amount [ml/m$^2$] | Amount of Aggregation Agent [g/m$^2$] | Water-Soluble organic Solvent | | |
| | | | | | | | | Kind | Boiling Point [°C] | SP Value |
| Example1 | C-1 | B-01 | U-LITE | 1.8 | B | 2.0 | 0.50 | TPGmME | 243 | 20.4 |
| Example2 | C-2 | B-02 | U-LITE | 1.8 | B | 2.0 | 0.50 | TPGmME | 243 | 20.4 |
| Example3 | C-2 | B-02 | U-LITE | 1.8 | C | 2.0 | 0.50 | TEGmBE | 278 | 21.1 |
| Example4 | C-2 | B-02 | U-LITE | 1.8 | D | 2.0 | 0.50 | DEGmEE | 202 | 22.4 |
| Example5 | C-2 | B-02 | U-LITE | 1.8 | E | 2.0 | 0.50 | SANNIX GP250: TPGmME (=2: 1) | - | - |
| Example6 | C-4 | B-04 | U-LITE | 1.8 | B | 2.0 | 0.50 | TPGmME | 243 | 20.4 |
| Example7 | C-4 | B-04 | U-LITE | 1.8 | C | 2.0 | 0.50 | TEGmBE | 278 | 21.1 |
| Example8 | C-2 | B-02 | U-LITE | 1.8 | B | 2.2 | 0.55 | TPGmME | 243 | 20.4 |
| Example9 | C-2 | B-02 | U-LITE | 1.8 | B | 0.98 | 0.25 | TPGmME | 243 | 20.4 |
| Example10 | C-2 | B-02 | U-LITE | 1.8 | B | 2.5 | 0.63 | TPGmME | 243 | 20.4 |
| Example11 | C-2 | B-02 | U-LITE | 1.8 | B | 0.85 | 0.21 | TPGmME | 243 | 20.4 |
| Example12 | C-2 | B-02 | Tokubishi Art | 2.5 | B | 2.9 | 0.73 | TPGmME | 243 | 20.4 |
| Example13 | C-2 | B-02 | Tokubishi Art | 2.5 | B | 1.8 | 0.45 | TPGmME | 243 | 20.4 |
| Example14 | C-2 | B-02 | Tokubishi Art | 2.5 | B | 3.5 | 0.88 | TPGmME | 243 | 20.4 |
| Example15 | C-2 | B-02 | Tokubishi Art | 2.5 | B | 1.0 | 0.25 | TPGmME | 243 | 20.4 |
| Example16 | C-2 | B-02 | OK topcoat+ | 2.0 | B | 2.5 | 0.63 | TPGmME | 243 | 20.4 |
| Example17 | C-2 | B-02 | OK topcoat+ | 2.0 | B | 1.1 | 0.28 | TPGmME | 243 | 20.4 |
| Example18 | C-2 | B-02 | OK topcoat+ | 2.0 | B | 3.2 | 0.80 | TPGmME | 243 | 20.4 |
| Example19 | C-2 | B-02 | OK topcoat+ | 2.0 | B | 0.9 | 0.23 | TPGmME | 243 | 20.4 |
| Example20 | C-2 | B-02 | U-LITE | 1.8 | B | 2.0 | 0.50 | TPGmME | 243 | 20.4 |

(continued)

| | Ink | Resin Particle | Recording Medium | | Aqueous Treatment liquid | | | | | |
|---|---|---|---|---|---|---|---|---|---|---|
| | | | Kind | $\Delta V$ | Kind (Treating Liquid) | Application Amount [ml/$m^2$] | Amount of Aggregation Agent [g/$m^2$] | Water-Soluble organic Solvent | | |
| | | | | | | | | Kind | Boiling Point [°C] | SP Value |
| Comp. Example1 | C-2 | B-02 | U-LITE | 1.8 | A | 2.0 | 0.50 | SANNIX GP250 | >280 | 26.38 |
| Comp. Example2 | C-3 | B-03 | U-LITE | 1.8 | A | 2.0 | 0.50 | SANNIX GP250 | >280 | 26.38 |
| Comp. Example3 | C-3 | B-03 | U-LITE | 1.8 | B | 2.0 | 0.50 | TPGmME | 243 | 20.4 |
| Comp. Example4 | C-3 | B-03 | U-LITE | 1.8 | C | 2.0 | 0.50 | TEGmBE | 278 | 21.1 |
| Comp. Example5 | C-4 | B-04 | U-LITE | 1.8 | A | 2.0 | 0.50 | SANNIX GP250 | >280 | 26.38 |
| Comp. Example6 | C-2 | B-02 | U-LITE | 1.8 | F | 2.0 | 0.50 | DEGmME | 194 | 23.0 |
| Comp. Example7 | C-2 | B-02 | U-LITE | 1.8 | - | - | - | - | - | - |
| Comp. Example8 | C-2 | B-02 | U-LITE | 1.8 | G | 2.0 | 0.50 | Glycerin | >280 | 41.0 |
| Comp. Example9 | C-1 | B-01 | U-LITE | 1.8 | H | 2.0 | 0.50 | SANNIX GP400 | >280 | 23.2 |

Table 2b

| | $MFT^0$ [°C] | $MFT^{25}$ [°C] | Fixation Temperature [°C] | Evaluation | | |
|---|---|---|---|---|---|---|
| | | | | Blocking Resistance | Scratch Resistance | Density Irregularity |
| Example1 | 75 | 10> | 75 | A | A | A |
| Example2 | 85 | 21 | 75 | A | A | A |
| Example3 | 85 | 17 | 75 | A | A | A |
| Example4 | 85 | 33 | 75 | A | A | B |
| Example5 | 85 | 33 | 75 | A | A | A |
| Example6 | 65 | 12 | 75 | B | A | A |
| Example7 | 65 | 10 | 75 | B | A | A |
| Example8 | 85 | 21 | 75 | A | A | A |
| Example9 | 85 | 21 | 75 | A | A | A |
| Example10 | 85 | 21 | 75 | A | B | A |
| Example11 | 85 | 21 | 75 | A | A | B |
| Example12 | 85 | 21 | 75 | A | A | A |
| Example13 | 85 | 21 | 75 | A | A | A |
| Example14 | 85 | 21 | 75 | A | B | A |
| Example15 | 85 | 21 | 75 | A | A | B |
| Example16 | 85 | 21 | 75 | A | A | A |
| Example17 | 85 | 21 | 75 | A | A | A |
| Example18 | 85 | 21 | 75 | A | B | A |
| Example19 | 85 | 21 | 75 | A | A | B |
| Example20 | 85 | 21 | 130 | A | A | C |
| Comp. Example1 | 85 | 48 | 75 | A | D | A |
| Comp. Example2 | 55 | 18 | 75 | C | D | A |
| Comp. Example3 | 55 | 10> | 75 | C | C | A |
| Comp. Example4 | 55 | 10> | 75 | C | C | A |
| Comp. Example5 | 65 | 30 | 75 | B | D | A |
| Comp. Example6 | 85 | 39 | 75 | A | C | B |
| Comp. Example7 | 85 | - | 75 | C | D | D |
| Comp. Example8 | 85 | 80 | 75 | C | D | A |
| Comp. Example9 | 75 | 32 | 75 | A | D | A |

As shown in Table 2b, in all the aqueous treatment liquids of the present invention, a good image which saved thermal energy and had scratch resistance while suppressing the occurrence of blocking was obtained. In addition, the occurrence of density irregularity was also suppressed. In contrast, in the comparative examples, it was difficult to make blocking resistance and scratch resistance be compatible, and scratch resistance was particularly poor. The present invention includes the following embodiments.

<1> An ink set for ink-jet recording comprising:

a water-based ink composition which includes water, a coloring material, and resin particles having a minimum film-forming temperature $MFT^0$ of 60°C or higher when prepared as an aqueous dispersion; and
an aqueous treatment liquid which includes water, an aggregation agent that forms an aggregate when contacted with the water-based ink composition, and a water-soluble organic solvent prepared such that a minimum film-forming temperature $MFT^{25}$ of the resin particles is at least 50°C lower than $MFT^0$ in the aqueous dispersion when a mixed liquid is prepared wherein the mixed liquid includes a mixture of the resin particles, water, and the water-soluble organic solvent in an amount of 25% by mass relative to the solid content of the resin particles.

<2> The ink set for ink-jet recording according to <1>, wherein the water-soluble organic solvent comprises alkyleneoxy alkyl ether.
<3> The ink set for ink-jet recording according to <1> or <2>, wherein the water-soluble organic solvent comprises alkyleneoxy alcohol.
<4>. The ink set for ink-jet recording according to any one of <1> to <3>, wherein the water-soluble organic solvent has a boiling point of 230°C or higher at 101.3 kPa.
<5> The ink set for ink-jet recording according to any one of <1> to <4>, wherein the water-soluble organic solvent has an SP value of 27.5 or less.
<6> The ink set for ink-jet recording according to any one of <1> to <5>, wherein the aggregation agent includes a divalent or higher-valent acidic compound.
<7> The ink set for ink-jet recording according to any one of <1> to <6>, wherein the resin particles include acrylic resin particles.
<8> The ink set for ink-jet recording according to any one of <1> to <7>, wherein the resin particles include self-dispersing polymer particles.
<9> The ink set for ink-jet recording according to any one of <1> to <8>, wherein the coloring material includes a pigment.
<10> The ink set for ink-jet recording according to any one of <1> to <9>, wherein the coloring material is a pigment coated with a polymer dispersant.
<11> An ink-jet recording method comprising:

using the ink set for ink-jet recording described in any one of <1> to <10>;
recording an image by applying a water-based ink composition onto a recording medium by an ink-jet method, and applying an aqueous treatment liquid onto the recording medium.

<12> The ink-jet recording method according to <11>, wherein the recording medium is a coated paper and, in the applying of the aqueous treatment liquid, the aqueous treatment liquid is applied to the coated paper such that an amount of the aqueous treatment liquid to be applied is -50% to + 30% relative to $\Delta V$ [ml/$m^2$], which is calculated by $\Delta V = Vi - Vr$ where Vr is the roughness index of the coated paper obtained by measurement of liquid absorption using Bristow's method and Vi is a transition amount in a bending point where a value of an absorption coefficient changes.
<13> The ink-jet recording method according to <11> or <12>, wherein the applying of the treatment liquid comprises applying the aqueous treatment liquid on the recording medium by coating.
<14> The ink-jet recording method according to any one of <11> to <13>, further comprising bringing an ink image, which is formed by applying the water-based ink composition to a recording medium, into contact with a heated face, and heating and fixing the image.
<15> The ink-jet recording method according to <14>, wherein a temperature of the heated face is from 70°C to 100°C.

All publications, patent applications, and technical standards mentioned in this specification are herein incorporated by reference to the same extent as if each individual publication, patent application, or technical standard was specifically and individually indicated to be incorporated by reference.

## Claims

1. An ink set for ink-jet recording comprising:

a water-based ink composition which includes water, a coloring material, and resin particles having a minimum film-forming temperature $MFT^0$ of 60°C or higher when prepared as an aqueous dispersion; and
an aqueous treatment liquid which includes water, an aggregation agent that forms an aggregate when contacted with the water-based ink composition, and a water-soluble organic solvent prepared such that a minimum film-forming temperature $MFT^{25}$ of the resin particles is at least 50°C lower than $MFT^0$ in the aqueous dispersion when a mixed liquid is prepared wherein the mixed liquid includes a mixture of the resin particles, water, and the water-soluble organic solvent in an amount of 25% by mass relative to the solid content of the resin particles.

2. The ink set for ink jet recording according to claim 1, wherein the water-soluble organic solvent comprises alkyleneoxy alkyl ether.

3. The ink set for ink jet recording according to claim 1 or 2, wherein the water-soluble organic solvent comprises alkyleneoxy alcohol.

4. The ink set for ink-jet recording according to any one of claims I to 3, wherein the water-soluble organic solvent has a boiling point of 230°C or higher at 101.3 kPa.

5. The ink set for ink-jet recording according to any one of claims 1 to 4, wherein the water-soluble organic solvent has an SP value of 27.5 or less.

6. The ink set for ink-jet recording according to any one of claims 1 to 5, wherein the aggregation agent includes a divalent or higher-valent acidic compound.

7. The ink set for ink-jet recording according to any one of claims 1 to 6, wherein the resin particles include acrylic resin particles.

8. The ink set for ink jet recording according to any one of claims 1 to 7, wherein the resin particles include self-dispersing polymer particles.

9. The ink set for ink-jet recording according to any one of claims 1 to 8, wherein the coloring material includes a pigment.

10. The ink set for ink-jet recording according to any one of claims 1 to 9, wherein the coloring material is a pigment coated with a polymer dispersant.

11. An ink-jet recording method comprising:

using the ink set for ink-jet recording described in any one of claims 1 to 10;
recording an image by applying a water-based ink composition onto a recording medium by an ink-jet method, and applying an aqueous treatment liquid onto the recording medium.

12. The ink-jet recording method according to claim 11, wherein the recording medium is a coated paper and, in the applying of the aqueous treatment liquid, the aqueous treatment liquid is applied to the coated paper such that an amount of the aqueous treatment liquid to be applied is -50% to + 30% relative to $\Delta V$ [$ml/m^2$], which is calculated by $\Delta V=Vi-Vr$ where Vr is the roughness index of the coated paper obtained by measurement of liquid absorption using Bristow's method and Vi is a transition amount in a bending point where a value of an absorption coefficient changes.

13. The ink-jet recording method according to claim 11 or 12, wherein the applying of the treatment liquid comprises applying the aqueous treatment liquid on the recording medium by coating.

14. The ink-jet recording method according to any one of claims 11 to 13, further comprising bringing an ink image, which is formed by applying the water-based ink composition to a recording medium, into contact with a heated face, and heating and fixing the image.

**15.** The ink-jet recording method according to claim 14, wherein a temperature of the heated face is from 70°C to 100°C.

**Patentansprüche**

**1.** Tintenset für die Tintenstrahlaufzeichnung, umfassend:

eine auf Wasser basierende Tintenzusammensetzung, die Wasser, ein Färbematerial und Harzpartikel mit einer minimalen Filmbildungstemperatur $MFT^0$ von 60°C oder höher, wenn sie als eine wässrige Dispersion zubereitet werden, umfasst; und
eine wässrige Behandlungsflüssigkeit, die Wasser, ein Aggregationsmittel, das ein Aggregat bildet, wenn es mit der auf Wasser basierenden Tintenzusammensetzung in Kontakt kommt, und ein wasserlösliches organisches Lösungsmittel umfasst, hergestellt so, dass die minimale Filmbildungstemperatur $MFT^{25}$ der Harzpartikel mindestens 50°C niedriger ist als $MFT^0$ in der wässrigen Dispersion, wenn eine gemischte Flüssigkeit hergestellt wird, worin die gemischte Flüssigkeit eine Mischung der Harzpartikel, Wasser und des wasserlöslichen organischen Lösungsmittels in einer Menge von 25 Massen% relativ zum Feststoffgehalt der Harzpartikel umfasst.

**2.** Tintenset für die Tintenstrahlaufzeichnung gemäß Anspruch 1, worin das wasserlösliche organische Lösungsmittel Alkylenoxyalkylether umfasst.

**3.** Tintenset für die Tintenstrahlaufzeichnung gemäß Anspruch 1 oder 2, worin das wasserlösliche organische Lösungsmittel Alkylenoxyalkohol umfasst.

**4.** Tintenset für die Tintenstrahlaufzeichnung gemäß irgendeinem der Ansprüche 1 bis 3, worin das wasserlösliche organische Lösungsmittel einen Siedepunkt von 230°C oder höher bei 101,3 kPa aufweist.

**5.** Tintenset für die Tintenstrahlaufzeichnung gemäß irgendeinem der Ansprüche 1 bis 4, worin das wasserlösliche organische Lösungsmittel einen SP-Wert von 27,5 oder kleiner aufweist.

**6.** Tintenset für die Tintenstrahlaufzeichnung gemäß irgendeinem der Ansprüche 1 bis 5, worin das Aggregationsmittel eine divalente oder höher valente saure Verbindung umfasst.

**7.** Tintenset für die Tintenstrahlaufzeichnung gemäß irgendeinem der Ansprüche 1 bis 6, worin die Harzpartikel Acrylharzpartikel umfassen.

**8.** Tintenset für die Tintenstrahlaufzeichnung gemäß irgendeinem der Ansprüche 1 bis 7, worin die Harzpartikel selbstdispergierende Polymerpartikel umfassen.

**9.** Tintenset für die Tintenstrahlaufzeichnung gemäß irgendeinem der Ansprüche 1 bis 8, worin das Färbematerial ein Pigment umfasst.

**10.** Tintenset für die Tintenstrahlaufzeichnung gemäß irgendeinem der Ansprüche 1 bis 9, worin das Färbematerial ein Pigment ist, das mit einem Polymer-Dispergiermittel beschichtet ist.

**11.** Tintenstrahlaufzeichnungsverfahren, umfassend:

unter Verwendung des Tintensets für die Tintenstrahlaufzeichnung gemäß irgendeinem der Ansprüche 1 bis 10, Aufzeichnen eines Bildes durch Auftragen einer auf Wasser basierenden Tintenzusammensetzung auf einem Aufzeichnungsmedium mit einem Tintenstrahlverfahren, und
Auftragen einer wässrigen Behandlungsflüssigkeit auf das Aufzeichnungsmedium.

**12.** Tintenstrahlaufzeichnungsverfahren gemäß Anspruch 11, worin das Aufzeichnungsmedium ein beschichtetes Papier ist und beim Auftragen der wässrigen Behandlungsflüssigkeit die wässrige Behandlungsflüssigkeit auf das beschichtete Papier so aufgetragen wird, dass die aufzutragende Menge der wässrigen Behandlungsflüssigkeit -50 bis +30 % beträgt, relativ zu $\Delta V$ [ml/m$^2$], welches durch $\Delta V$=Vi-Vr berechnet wird, worin Vr der Rauigkeitsindex des beschichteten Papiers ist, erhalten durch eine Messung der Flüssigkeitsabsorption unter Verwendung des Bristow-Verfahrens, und Vi eine Übergangsmenge in einem Wendepunkt ist, wo ein Wert eines Absorptionskoeffizienten sich verändert.

**13.** Tintenstrahlaufzeichnungsverfahren gemäß Anspruch 11 oder 12, worin das Auftragen der Behandlungsflüssigkeit das Auftragen der wässrigen Behandlungsflüssigkeit auf das Aufzeichnungsmedium durch Beschichten umfasst.

**14.** Tintenstrahlaufzeichnungsverfahren gemäß irgendeinem der Ansprüche 11 bis 13, ferner umfassend das in Kontakt bringen eines Tintenbildes, welches durch Auftragen der auf Wasser basierenden Tintenzusammensetzung auf ein Aufzeichnungsmedium gebildet ist, mit einer erwärmten Fläche, und Erwärmen und Fixieren des Bildes.

**15.** Tintenstrahlaufzeichnungsverfahren gemäß Anspruch 14, worin die Temperatur der erwärmten Fläche 70 bis 100°C beträgt.

**Revendications**

**1.** Jeu d'encre pour enregistrement par jet d'encre comprenant :

une composition d'encre à base d'eau qui comprend de l'eau, une matière colorante et des particules de résine ayant une température minimale de formation de film $MFT^0$ supérieure ou égale à 60 °C lorsqu'elle est préparée sous la forme d'une dispersion aqueuse ; et
un liquide de traitement aqueux qui comprend de l'eau, un agent d'agrégation qui forme un agrégat lorsqu'il est mis en contact avec la composition d'encre à base d'eau, et un solvant organique soluble dans l'eau préparé de manière à ce que la température minimale de formation de film $MFT^{25}$ des particules de résine soit au moins 50 °C inférieure à la valeur $MFT^0$ de la dispersion aqueuse lorsqu'un liquide mixte est préparé, le liquide mixte comprenant un mélange des particules de résine, d'eau, et du solvant organique soluble dans l'eau en une quantité de 25 % en masse par rapport à la teneur solide des particules de résine.

**2.** Jeu d'encre pour enregistrement par jet d'encre selon la revendication 1, dans lequel le solvant organique soluble dans l'eau comprend de l'éther d'alkylène-oxyalkyle.

**3.** Jeu d'encre pour enregistrement par jet d'encre selon la revendication 1 ou 2, dans lequel le solvant organique soluble dans l'eau comprend de l'alcool d'alkylène-oxy.

**4.** Jeu d'encre pour enregistrement par jet d'encre selon l'une quelconque des revendications 1 à 3, dans lequel le solvant organique soluble dans l'eau a un point d'ébullition supérieur ou égal à 230 °C à 101,3 kPa.

**5.** Jeu d'encre pour enregistrement par jet d'encre selon l'une quelconque des revendications 1 à 4, dans lequel le solvant organique soluble dans l'eau a une valeur SP inférieure ou égale à 27,5.

**6.** Jeu d'encre pour enregistrement par jet d'encre selon l'une quelconque des revendications 1 à 5, dans lequel l'agent d'agrégation comprend un composé acide divalent ou de valence supérieure.

**7.** Jeu d'encre pour enregistrement par jet d'encre selon l'une quelconque des revendications 1 à 6, dans lequel les particules de résine comprennent des particules de résine acrylique.

**8.** Jeu d'encre pour enregistrement par jet d'encre selon l'une quelconque des revendications 1 à 7, dans lequel les particules de résine comprennent des particules de polymère auto-dispersibles.

**9.** Jeu d'encre pour enregistrement par jet d'encre selon l'une quelconque des revendications 1 à 8, dans lequel la matière colorante comprend un pigment.

**10.** Jeu d'encre pour enregistrement par jet d'encre selon l'une quelconque des revendications 1 à 9, dans lequel la matière colorante est un pigment revêtu d'un dispersant de polymère.

**11.** Procédé d'enregistrement par jet d'encre comprenant :

l'utilisation du jeu d'encre pour enregistrement par jet d'encre selon l'une quelconque des revendications 1 à 10 ;
l'enregistrement d'une image par application d'une composition d'encre à base d'eau sur un support d'enregistrement par un procédé à jet d'encre, et
l'application d'un liquide de traitement aqueux sur le support d'enregistrement.

**12.** Procédé d'enregistrement par jet d'encre selon la revendication 11, dans lequel le support d'enregistrement est un papier enduit et dans lequel, lors de l'application du liquide de traitement aqueux, le liquide de traitement aqueux est appliqué sur le papier enduit de manière à ce que la quantité du liquide de traitement aqueux à appliquer soit de -50 % à +30 % par rapport à $\Delta V$ [ml/m$^2$], qui est calculé par $\Delta V = Vi-Vr$ où Vr représente l'indice de rugosité du papier enduit obtenu en mesurant l'absorption de liquide à l'aide de la méthode de Bristow et Vi représente la quantité de transition d'un point d'inflexion où la valeur du coefficient d'absorption change.

**13.** Procédé d'enregistrement par jet d'encre selon la revendication 11 ou 12, dans lequel l'application du liquide de traitement comprend l'application du liquide de traitement aqueux sur le support d'enregistrement par enduction.

**14.** Procédé d'enregistrement par jet d'encre selon l'une quelconque des revendications 11 à 13, comprenant en outre la mise en contact d'une image à l'encre, qui est formée en appliquant la composition d'encre à base d'eau sur un support d'enregistrement, avec une surface chauffée, et à chauffer et à fixer l'image.

**15.** Procédé d'enregistrement par jet d'encre selon la revendication 14, dans lequel la température de la surface chauffée est de 70 °C à 100 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9207424 A
- JP 2006188045 A
- JP 8283636 A
- JP 10110126 A
- JP 10152640 A
- JP 2001115066 A
- JP 2001335714 A
- JP 2002249677 A
- JP 2001181549 A
- JP 2007169418 A
- JP 2002088294 A
- JP 2001247787 A
- JP 10230201 A
- JP 2003306623 A
- JP 54059936 A


### Non-patent literature cited in the description


- **BRISTOW.** Liquid Absorbency Test Method of Paper and Paperboad. *JAPAN TAPPI JOURNAL,* 1987, vol. 41 (8), 57-61